# FASCICULE DE BREVET EUROPEEN

(11) **EP 0 580 727 B1**
(45) Date de publication et mention de la délivrance du brevet: **09.07.1997**
(21) Numéro de dépôt: 92910053.5
(22) Date de dépôt: 14.04.1992
(51) Int. Cl.: G06F 13/14, G06F 12/08

(54) **CIRCUIT COUPLEUR ET SON UTILISATION DANS UNE CARTE ET PROCEDE**
KOPPLERSCHALTUNG UND IHRE VERWENDUNG IN EINER LEITERPLATTE UND VERFAHREN HIERFÜR
COUPLING CIRCUIT, USE THEREOF IN A CARD, AND METHOD

(30) Priorité: 15.04.1991 FR 9104598
(43) Date de publication de la demande: 02.02.1994
(73) Titulaire: BULL S.A., 92800 Puteaux (FR)
(72) Inventeur: GILET, Roger, F-94240 L'Hay-les-Roses (FR); VERGNORY-MION, Pascal, F-93700 Drancy (FR)
(74) Mandataire: Colombe, Michel
(86) Numéro de dépôt international: FR9200332
(87) Numéro de publication internationale: WO9218928

(56) Documents cités:
- EP-A- 0 203 601
- EP-A- 0 354 579

## Description

La présente invention concerne un circuit coupleur et son utilisation dans une carte et son procédé.

Il est connu des dispositifs de stockage et transfert d'information entre un disque lent et un processeur central. Ces dispositifs font souvent appel, comme dans le brevet U.S. N° 4 533 995, à un cache dont on cherche à minimiser la taille. Ce document U.S. N° 4 533 995 enseigne un dispositif permettant à un processeur central d'effectuer des accès directs a un disque et des accès par un cache tampon. Toutefois, le dispositif est réalisé par un microprocesseur programmé dont le programme effectue la gestion des adresses de la mémoire cache dont la taille a été minimisée.

Il est également connu par le brevet EP 203 601 un système de cache adoptant le système LRU et un contrôleur de disque magnétique incorporant un tel système. Ce document décrit une carte d'interface disque comprenant un microprocesseur, un contrôleur de disque, une mémoire cache et des moyens de gérer les accès entre le contrôleur de disque et la mémoire cache. Toutefois ce document n'enseigne pas à un circuit intégré qui gère l'ensemble et qui permette d'échanger entre le disque et un processeur central de façon à soulager au maximum le microprocesseur de la gestion des échanges.

Un premier but est de proposer un circuit intégré qui permette de soulager le microprocesseur de la gestion des échanges entre une mémoire cache de taille importante, constituée par une mémoire vive dynamique et un contrôleur de disque ou un bus "MCA".

Ce but est atteint par le fait que le circuit coupleur entre un circuit contrôleur de disque, un microprocesseur, une mémoire cache dynamique communiquant avec un processeur central à travers un bus, comporte des moyens de gérer les transferts entre le contrôleur disque et la mémoire cache, caractérisé en ce que :
- lesdits moyens de gérer les transferts entre le contrôleur disque et la mémoire cache après initialisation par le processeur ont la priorité la plus élevée ; et en ce que ledit circuit coupleur comporte
- des moyens de gérer en tant que deuxième accès le plus prioritaire les cycles de rafraîchissement de la mémoire dynamique constituant le cache ;
- des moyens de gérer les accès du microprocesseur à la mémoire cache ;
- des moyens de gérer dans les deux sens avec la priorité la plus faible les accès liés aux transferts entre la mémoire cache et une pile bidirectionnelle connectée à celle-ci et audit bus, ladite pile étant incorporée au circuit coupleur, après initialisation par le microprocesseur.

Selon une autre particularité, le circuit coupleur comporte un circuit d'arbitrage, une pile bidirectionnelle de 4 mots commandée par un automate de pile, un circuit contrôleur délivrant un signal de sens de fonctionnement de la pile en fonction des informations délivrées par un registre de butée de l'automate de pile et un comparateur de l'automate de pile préalablement chargé par le microprocesseur avec l'adresse de démarrage des échanges avec la mémoire cache, le registre butée étant chargé avec l'adresse de fin d'échange et avec un bit de validation (ACTIF) du circuit d'arbitrage.

Selon une autre particularité, le circuit coupleur comporte un automate de gestion des transferts entre le circuit contrôleur de disque et la mémoire cache, ledit automate de gestion comportant un registre contenant l'adresse de début de transfert de la mémoire, et un registre de butée et comparateur contenant l'adresse de fin de transfert, et un bit de validation (ACTIE) du circuit d'arbitrage.

Selon une autre particularité les registres butée comparateurs de pile et de transfert disque comportent un bit d'indication de l'égalité des valeurs contenues dans la butée et dans le registre compteur incrémentés pour arrêter l'arbitre.

Selon une autre particularité, le circuit contrôleur délivre les signaux d'incrémentation (INCF, INCE) des compteurs, des automates de pile et respectivement de disque.

Selon une autre particularité, l'automate de transfert disque mémoire comporte deux registres de préchargement permettant de précharger le contenu des registres compteur et butée pour accélérer un transfert disque mémoire.

Selon une autre particularité, le circuit coupleur comporte un registre (MODE) et une horloge de rafraîchissement dont la période est paramétrable par le contenu du troisième bit du registre (MODE).

Selon une autre particularité, les bits 0 et 1 du registre MODE sont envoyés sur un circuit de masquage de requête de transfert disque pour paramétrer le temps de masquage des requêtes de transfert demandées par le-microprocesseur.

Selon une autre particularité, le circuit coupleur comporte des compteurs incrémentés par une horloge paramétrée en fonction des caractéristiques du disque, et un signal index de détection du passage du secteur "0" délivré par le circuit contrôleur de disque et servant à réinitialiser le compteur de secteur d'un disque.

Selon une autre particularité, le circuit contrôleur établit en outre les séquences de signaux RAS, CAS, WE, CSE1, CSE2 nécessaires au fonctionnement de la mémoire cache.

Selon une autre particularité, le circuit coupleur comporte un circuit de contrôle de la parité des données écrites dans la mémoire cache pour générer une interruption à destination du microprocesseur en cas de non concordance entre la parité lue et celle calculée par le circuit de parité.

Selon une autre particularité, le circuit coupleur comporte une pile (COMMAND INTERFACE) , une pile d'état des interfaces, un registre d'état de base, pour permettre au processeur central de consulter l'état des piles et connecter, d'une part au bus" MCA", et d'autre part au bus de donnée du microprocesseur, la pile (COMMAND INTERFACE) étant utilisée par le processeur central pour transférer un bloc de commande au circuit coupleur et la pile état des interfaces étant utilisée par le processeur central pour récupérer un bloc d'état.

Selon une autre particularité, le circuit coupleur comporte en outre un registre (ATTENTION) connecté entre le bus "MCA" et le bus donnée du microprocesseur pour indiquer au microprocesseur que le processeur central veut envoyer une nouvelle commande.

Selon une autre particularité, le circuit coupleur comporte en outre un registre état des interruptions pour interrompre le processeur central et l'informer du type d'interruption.

Selon une autre particularité, le circuit coupleur comporte un registre état (ITGA) indiquant au microprocesseur la source ayant gérée une interruption à destination du microprocesseur.

Selon une autre particularité, le circuit coupleur comporte un registre de contrôle (CTL ITGA) pour permettre au microprocesseur de remettre à "0" les informations du registre état (ITGA).

Selon une autre particularité, un bit du registre d'état de base est utilisé pour indiquer une demande de transfert de données en générant un signal (DRQ) du circuit coupleur vers le circuit d'interface de la carte.

un autre but est de proposer une carte d'interface (ESDI) avec un bus "MCA" qui permettent au circuit coupleur de gérer les échanges tout en permettant au microprocesseur de la carte d'exécuter d'autres routines.

Ce but est atteint par le fait que la carte d'interface entre un bus "MCA" et un lecteur de disque comportant un circuit contrôleur de disque, un microprocesseur, une mémoire cache, est caractérisée en ce que le contrôleur de disque communique par un circuit de multiplexage avec deux bus de données, un premier bus communiquant avec le microprocesseur et un circuit coupleur et un second bus communiquant avec la mémoire cache et le circuit coupleur, le microprocesseur communique par un bus d'adresse avec une mémoire vive statique, une mémoire non volatile contenant le logiciel de gestion des échanges entre le disque, la mémoire cache ou entre la mémoire cache et le bus "MCA" et des tables pour la gestion de la mémoire cache.
Selon une autre particularité, le circuit coupleur communique par un bus de données avec le bus "MCA" et une mémoire morte contenant le logiciel d'entrée/sortie de base de la carte d'interface avec le système.

Selon une autre particularité, le circuit coupleur communique par un bus d'adresse d'une part avec la mémoire morte, et d'autre part par une porte de validation avec le bus "MCA", ledit circuit coupleur échangeant des signaux de contrôle avec un circuit d'interface connecté au bus d'adresse du bus "MCA" et échangeant des signaux de contrôle avec ce bus "MCA".

Selon une autre particularité, le microprocesseur gère les tables de gestion de la mémoire cache ; interprète les commandes provenant de l'unité centrale ; programme les automates du circuit coupleur ; commande le circuit contrôleur de disque.

Un autre but est de proposer un procédé de gestion des échanges de la carte permettant de s'assurer qu'il n'y a pas conflit entre le processeur central et un élément de la carte.

Ce but est atteint par le fait que le procédé de gestion des échanges entre un processeur central et un circuit coupleur entre circuits contrôleur de disque, un microprocesseur et une mémoire cache dynamique caractérisé en qu'il consiste :
à gérer avec la priorité la plus élevée les transferts entre le contrôleur de disque et la mémoire cache, après initialisation par le microprocesseur ;
à gérer en tant que deuxième accès le plus prioritaire les cycles de rafraîchissement de la mémoire dynamique constituant le cache ;
à gérer les excès du microprocesseur à la mémoire cache ;
à gérer dans les deux sens avec la priorité la plus faible les accès entre la mémoire cache et une pile bidirectionnelle connectée à celle-ci et à un bus de communication avec le processeur central, après initialisation par le microprocessor.

Selon une autre particularité, le procédé comporte une étape de génération d'une interruption (ATN) par le circuit coupleur à destination du microprocesseur du coupleur.

Selon une autre particularité, le procédé consiste à programmer le "DMA" du circuit coupleur et à valider le canal d'accès mémoire direct sur le coupleur, après avoir reçu une interruption de transfert (READY) générée par le code formé par les 3 bits du registre d'état des interruptions écrit par le microprocesseur de la carte ;
à valider un bit du registre de contrôle (BASIC CONTROL) pour valider le canal d'accès mémoire direct sur le coupleur.

Selon une autre particularité, le procédé comporte une étape de validation d'un bit du registre de contrôle (BASIC CONTROL) pour valider les interruptions générées par le coupleur à destination du processeur central.

Un autre but est de proposer un procédé de gestion des échanges avec la mémoire cache permettant de gagner du temps pour gérer la mémoire cache.

Ce but est atteint par le fait que la mémoire cache est divisée en 4 voies et la mémoire EPROM contient une table d'allocation (TAG) de la mémoire cache, représentant l'identification du secteur ou portion de secteur contenu dans chaque voie d'une ligne de cette table d'allocation ;
ledit procédé consistant à adresser une ligne de cette table par les bits poids faible de l'adresse du secteur à lire ;
à identifier si le secteur à lire est déjà contenu dans la mémoire cache par comparaison des bits de poids forts de l'adresse du secteur avec les informations contenues dans le tableau (TAG) ;
à décider de lire le secteur dans la mémoire cache en cas d'identificaion ou de lire le secteur sur le disque pour l'inscrire dans la mémoire cache en cas d'absence ;
à décider de l'emplacement dans lequel on va insérer le secteur en utilisant une table (MRU), moins récemment utilisée (Least Recently Used, LRU) pour définir les poids forts de l'adresse de la voie la moins récemment utilisée dans laquelle on va substituer les nouvelles données ;
à modifier le contenu de la table (MRU) suite à l'inscription.

Selon une autre particularité, le procédé consiste à utiliser un tableau ancien contenu dans la mémoire EPROM permettant de faire, par simple lecture, la correspondance entre le contenu de la table (MRU) à l'adresse pointée et le numéro de la voie dans laquelle on va inscrire les données ;
à utiliser une combinaison du contenu de la table (MRU) à l'adresse pointée avec le numéro de la voie indiqué par la table ancienne pour adresser un tableau (NMRU) dans la mémoire dont le contenu à l'adresse ainsi déterminée donne immédiatement par simple lecture la valeur à inscrire dans la table (MRU) pour indiquer que l'ancienneté de la voie dans laquelle on a rangé l'information a été modifiée, ainsi que l'ancienneté des voies associées dans la même ligne du tableau (MRU).

Selon une autre particularité, le procédé comporte en cas d'identification une étape de chargement de l'automate de gestion de pile avec les paramètres nécessaires au transfert des données de la mémoire vers la pile et au déclenchement de l'arbitre.

Selon une autre particularité, le procédé comporte en cas de non identification, préalablement à l'étape ci-dessus, une étape de chargement de l'automate disque par le microprocesseur de la carte avec les paramètres nécessaires à l'échange de données entre le contrôleur de disque et la mémoire cache et au déclenchement de l'arbitre.

D'autres caractéristiques et avantages de l'invention apparaîtront plus clairement à la lecture de la description faite en référence aux dessins annexés dans lesquels :
- La figure 1 représente une vue du schéma électronique de la carte utilisant l'invention ;
- La figure 2A représente le schéma fonctionnel d'une partie du circuit coupleur selon l'invention ;
- La figure 2B représente le schéma fonctionnel de la partie interface mémoire du circuit coupleur selon l'invention ;
- La figure 2C représente le contenu des registres de la figure 2A ;
- La figure 2D représente le contenu des registres de la figure 2B ;
- La figure 2E représente les adresses de sélection des différents registres ou éléments du circuit coupleur ;
- La figure 2F représente le schéma des liaisons du circuit coupleur permettant les communications entre les differents bus de la carte ;
- Les figures 3A à 3G représentent les différentes séquences d'échange de signaux entre le circuit coupleur et les autres éléments de la carte ;
- La figure 3H représente l'enchaînement des différentes séquences entre elles et les ordres de priorité de ces séquences ;
- La figure 4 représente les tables de gestion de la mémoire cache.

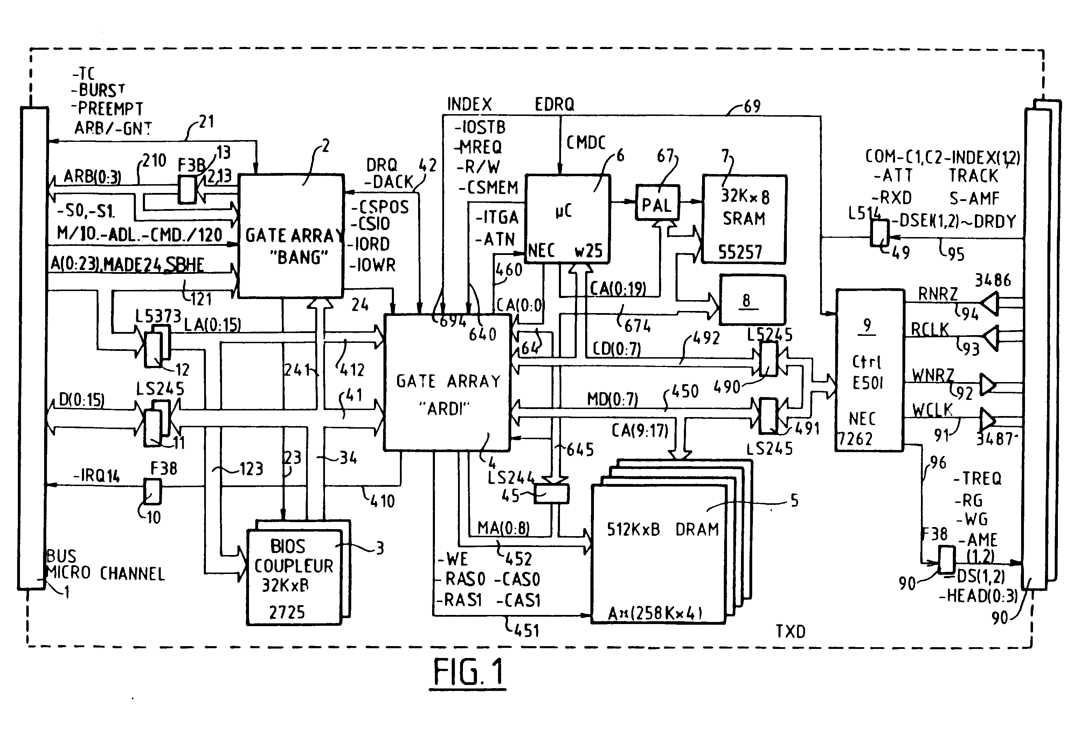

La figure 1 représente le schéma d'une carte d'interface intelligente contrôleur de disques. Cette carte est connectée sur un bus (1) du type "MCA" (Micro Channel Architecture) par l'intermédiaire d'un circuit intégré d'arbitrage du bus (2) réalisant l'interface entre le bus (1) et les circuits de la carte. Pour plus de détails sur ce circuit intégré (2), on se référera à la demande de brevet déposée par BULL S.A. intitulée "Circuit coupleur d'interface multi-applications pour bus MCA et utilisations d'un tel circuit" et publiée sous le numéro WO-A-9218933.

Ce circuit (2) gère les accès à une mémoire (3) du type EPROM qui contient la partie "BIOS" (système d'entrée/sortie de base) de l'interface disques. Un circuit coupleur (4) réalise matériellement l'interface d'entrée/sortie entre le processeur central et un circuit microprocesseur (6), ainsi que l'interface entre une mémoire cache (5) constituée de mémoires vives dynamiques et un circuit contrôleur de disque (9). Le circuit coupleur (4) est relié au circuit contrôleur de disque (9), du type tel que celui commercialisé par NEC sous la référence 7262, par deux bus de données séparés, l'un MD(0:7) (450) reliant le circuit coupleur (4) à la mémoire cache (5), l'autre CD(O:7) (492) reliant le contrôleur de disque d'une part au microprocesseur (6), d'autre part au circuit coupleur (4). Le circuit coupleur (4) reçoit les données provenant du bus "MCA" (1) par le bus (41) interfacé avec ce bus "MCA" (1) par des registres tampons (11).

Un bus (34) permet également de relier la mémoire EPROM (3) contenant le programme d'interface "BIOS" avec le bus (41). Un bus (241) relie ce bus (41) au coupleur (2) d'interface pour bus "MCA". Le circuit coupleur (4) reçoit également par un bus (412) les adresses LA(O:15) provenant à travers des circuits tampons (12) du bus d'adresse A(0:23) (121) qui relie le bus "MCA" (1) au circuit coupleur d'interface (2). Sur ce bus (121), transitent également les signaux (MADE24, SBHE). Un bus de contrôle (120) permet de recevoir du bus "MCA" (1) les signaux (S0, S1, M/IO, ADL, CMD).

Le circuit d'interface coupleur (2) émet par le bus (213) interfacé par un registre tampon (13) et reçoit par le bus (210) les signaux ARB(0:3). Un bus de contrôle (21) reçoit et émet les signaux (TC, BURST, PREEMPT, ARB/-GNT). Le circuit d'interface (2) envoie par le bus de contrôle (24) les signaux (CSPOS, CSIO ; IORD, IOWR). Le circuit (2) reçoit ou émet par les lignes de contrôle (42) les signaux (DRQ, DACK). Le circuit coupleur (4) reçoit par la ligne (694) le signal index provenant du disque, et par les lignes (640), les signaux (IOSTB, MREQ, R/W, CSMEM), provenant du circuit microprocesseur (6). Le circuit microprocesseur (6) reçoit également les signaux (ITGA) et (ATN) en provenance du circuit coupleur (4) par les lignes (460). Ce microprocesseur (6) est relié par un bus d'adresse CA(0:19) (674), d'une part avec le circuit coupleur (4), d'autre part avec la mémoire statique (7), et enfin, avec la mémoire EPROM (8) qui contient le logiciel de fonctionnement de la carte. Le circuit coupleur (4) envoie par la liaison (451), les signaux de contrôle (WE, RAS0, RAS1, CAS0, CAS1).

Le contrôleur de disque (9) reçoit du connecteur de disque (90), par les lignes (95), les signaux (COM-C1, C2, ATT, RXD, TRACK, S-AMF, DSEL, INDEX, DRDY). De même, ce circuit (9) reçoit par la ligne (94), le signal de donnée en lecture (RNRZ) ; par la ligne (93), le signal d'horloge lecture (RCLK) ; par la ligne (92), le signal de donnée en écriture (WNRZ) ; par la ligne (91), le signal d'horloge écriture (WCLK) ; et par la ligne (96), interfacée par le circuit (17), les signaux (TREQ, RG, WG, AME(1:2), DS(1:2), HEAD(0:3), TXD).

En ce qui concerne le mode de fonctionnement du circuit coupleur d'interface (2) et la signification des signaux reçus et émis par celui-ci, on se repportera à la description de la demande citée ci-dessus.

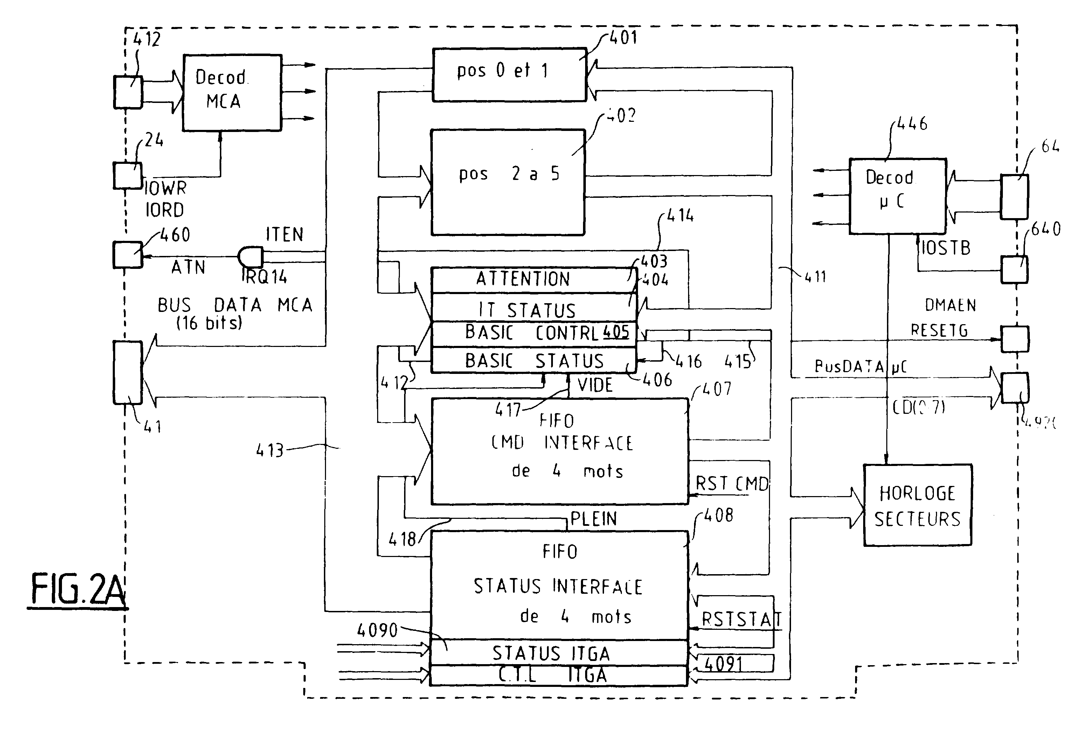

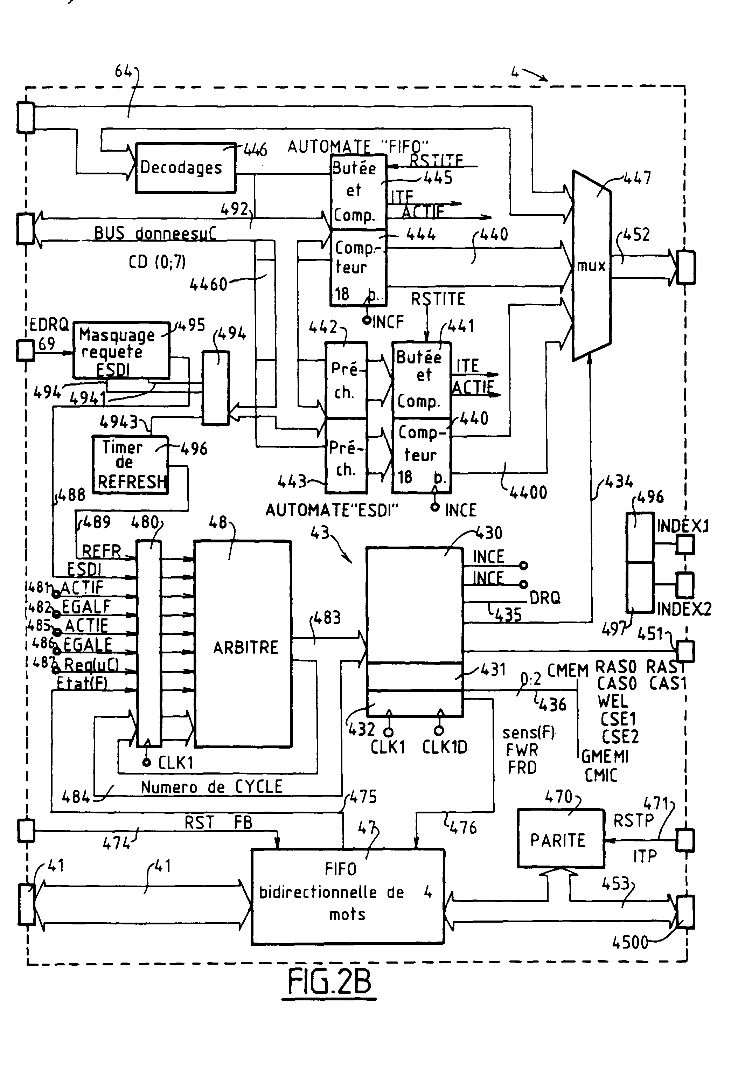

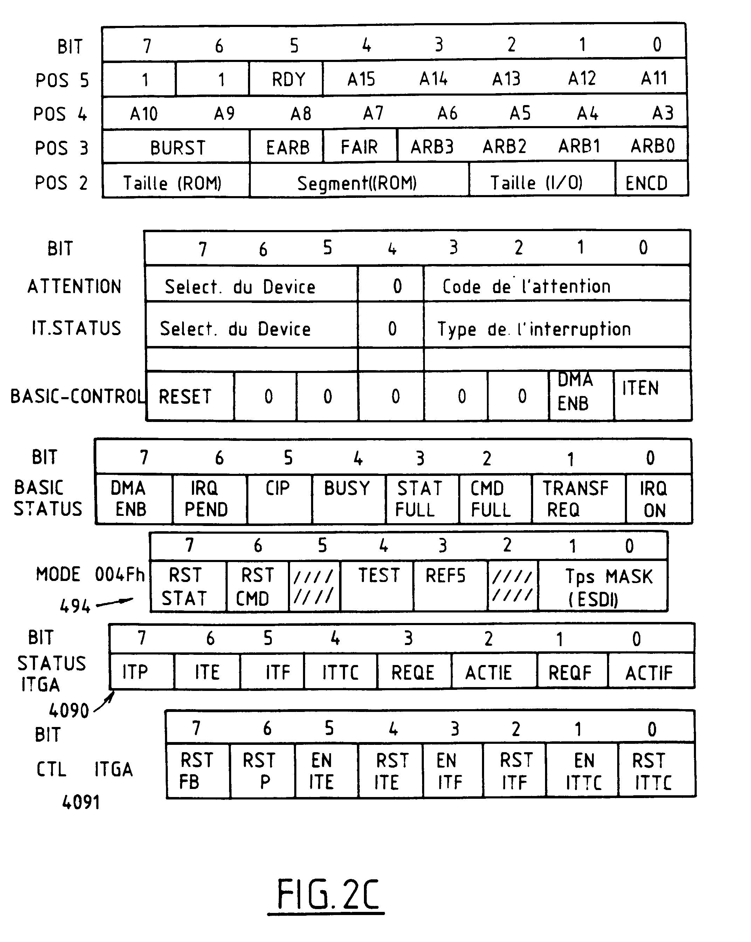

La figure 2A représente le schéma logique de l'interface d'entrée/sortie du circuit coupleur (4), tandis que la figure 2B représente le schéma logique des circuits réalisant les fonctionnalités mémoire du circuit coupleur (4). La figure 2A représente la partie du circuit (4) gérant les échanges entre le bus "MCA" (1) et le bus de données CD(0:7) (492) provenant du microprocesseur (6), ou du contrôleur de disque (9). Le circuit (4) effectue l'interface entrée/sortie entre le calculateur central (HOST) et le microprocesseur (6) de la carte. Le circuit (4) coordonne également tous les accès à la mémoire cache, DRAM (5), ainsi que les échanges sur le bus 8 bits de données (450).

La figure 2B représente le schéma logique de la partie du circuit (4) gérant les échanges entre le bus de données (492), le bus d'adresse (452), les bus de données (450) accédant à la mémoire cache (5) et (41) accédant au bus microchannel 1.

Le circuit de la figure 2A comporte deux registres (401) dénomés POS 0 et POS 1 (option de sélection programmable) localisés à l'adresse (100 et 101) et servant de registre d'identification de la carte. Ces deux registres sont reliés par le bus interne (413) au bus de données (41) d'une part, et par un deuxième bus interne (411) et un circuit de multiplexage interne (4920) au bus de données du microprocesseur (492). Sur les mêmes bus sont également reliés quatre registres de programmation de matériel (402) appelés POS 2 à POS 5 et implantés aux adresses (102 à 105). On notera que les registres POS 2 à 5 du circuit (4) sont la recopie du contenu des registres correspondants du circuit (2) et que le processeur (6) n'accède qu'en lecture au registre POS 2 à 5 du circuit (4).

Les registres POS 2 à POS 5 contiennent les informations représentées à la figure 2C et dont les bits ont, pour le registre POS 2 implanté à l'adresse (102), les significations indiquées ci-après :

Le bit 0 est un bit de validation de la carte ENCD, validant cette carte selon sa valeur.

Les bits 1 et 2 indiquent la taille du champ d'entrée/sortie du coupleur selon le tableau ci-après :

| | |
|---|---|
| 00 | pas d'entrée/sortie |
| 01 | 8 octets |
| 10 | 16 octets |
| 11 | 32 octets |

Les bits 3 à 5 indiquent le numéro du segment de ROM BIOS utilisé par le codage suivant :
- 000: C000 à C3FFF
- 001: C400 à C7FFF
- ...: ...
- 111: DC000 à DFFFF

Les bits 6 à 7 indiquent la taille de la ROM dans lequel le segment BIOS est implanté selon le code ci-après :
- 00: inhibition de la ROM
- 01: 16 Koctets
- 10: 32 Koctets
- 11: 64 Koctets

Le registre POS 3, implanté à l'adresse (103), indique par ses bits 0 à 7 les informations suivantes :
- Bits 0-3 :: ARB(0:3). Niveau d'arbitration du canal "DMA"
- Bit 4 :: FAIR. Validation du mode "EQUITE" (FAIRNESS) dans l'arbitrage des accès mémoire direct en rafale pour éviter qu'un canal DMA monopolise le système.
- Bit 5 :: EARB. Validation de l'arbitrage (autorise la participation à un arbitrage MCA).
- Bits 6-7 :: BURST. Programmation de la taille des rafales (BURST), durée maximale du signal PREEMPT de MCA en sachant que le mode bloqué est interruptible par le signal PREEMPT
00 accès simple (pas de BURST)
01 8 cycles
10 16 cycles
11 32 cycles Note : le mode BURST ne fonctionne qu'en cycle étendu synchrone 300ns minimum

Le registre POS 4, implanté à l'adresse (104), indique par ses bits 0 à 7 les informations suivantes :
- Bits 0-7 :: A(3:10). Bits 3 à 10 de l'adresse de base I/O.

Le registre POS 5, implanté à l'adresse (105), indique par ses bits 0 à 7 les informations suivantes :
- Bits 0-4 :: A(11:15). Bits 11 à 15 de l'adresse de base I/O.
- Bit 5 :: RDY. Gestion du signal CDCHRDY: 200ns ou >= 300ns.
- Bits 6-7 :: Réservé.

Le circuit est également constitué des registre ATTENTION (403), INTERRUPT STATUS (404), BASIC CONTROL (405), BASIC STATUS (406), d'une pile FIFO COMMAND INTERFACE de quatre mots (407), d'une deuxième pile FIFO STATUS INTERFACE de quatre mots (408), qui sont accessibles d'une part par le bus (413), d'autre part par le bus (411).

Le contenu des différents registres est représenté à la figure 2C.

Le registre ATTENTION (403) est utilisé pour indiquer au microprocesseur (6) que l'unité centrale veut envoyer une nouvelle commande. L'écriture à ce registre génère immédiatement une interruption (appelée ATN) vers le microprocesseur (6). Le fonctionnement en multi-tâches de l'unité centrale impose un protocole strict d'envoi des commandes par l'unité centrale et de réponse du circuit coupleur (4). L'unité centrale n'a le droit d'écrire dans le registre ATTENTION que si les bits BUSY et IT PENDING du registre BASIC STATUS décrit ci-après sont à zéro. Si l'un de ces deux bits est à 1, cela indique que le coupleur est dans une phase critique au cours de laquelle il ne peut pas recevoir une nouvelle commande.

La définition des bits du registre ATTENTION est la suivante :
- Bits: 7-5 :
000 Attention concernant le disque 0
001 Attention concernant le disque 1
01x Réservé
10x Réservé
111 Attention concernant le coupleur
- Bit 4 :: Réservé, toujours à 0
- Bits 3-0 :: 0001 (Command Request) Requête de commande
0010 (End of Interrupt) Fin d'interruption
0011 (Abort Command) Suspension de commande
0100 (Reset Command) Réinitialisation de commande

Dans le circuit 4, la définition de ces bits est indifférente et c'est le microprocesseur (6) qui va leur accorder une signification. Pour le circuit coupleur (4), les bits de ce registre n'ont aucune action matérielle interne. Mais sur écriture à ce registre, le circuit coupleur (4) transmet une interruption au microprocesseur (6).

Le registre BASIC CONTROL (405) permet à l'unité centrale de contrôler certaines fonctions de base du circuit coupleur (4). La définition de ses bits est la suivante :
- Bit 7 :: RESET. Mis à 1, le matériel est remis à 0 et le microprocesseur (6) effectue sa séquence de démarrage.
- Bits 6-2 :: Réservés. A mettre à zéro.
- Bit 1 :: Validation du canal DMA sur le coupleur. Après avoir programmé son DMA et après avoir reçu une interruption "Transfert Ready", le processeur central (HOST) doit valider ce bit.
- Bit 0 :: ITEN. Validation de l'interruption IRQ14. S'il est à 0, le coupleur sera incapable de générer une interruption à l'unité centrale.

Les actions des bits 7, 1 et 0 sont faites dans le circuit coupleur (4). Le registre est entièrement lisible par le microprocesseur (6), y compris les bits 2 à 6.

Le registre BASIC STATUS (406) permet à l'unité centrale de consulter l'état des interfaces COMMAND INTERFACE et STATUS INTERFACE, ainsi que d'autres bits matériels du circuit coupleur (4). La définition de ses bits est la suivante :
- Bit 7 :: Validation du canal DMA. Ce bit reflète l'état du bit 1 du registre BASIC CONTROL (405).
- Bit 6 :: Préparation d'une interruption. Le circuit coupleur (4) met ce bit à 1 quand il est dans une phase critique dans laquelle il est sur le point d'écrire le registre INTERRUPT STATUS et de générer une IT. Ce bit est remis à 0 à l'IT.
- Bit 5 :: Commande en cours de traitement (CIP). Ce bit est mis à 1 dès que le coupleur lit le bloc de commande et il est remis à 0 après que le processeur central (HOST) ait envoyé le code "Fin d'interruption" (END OF INTR) dans le registre ATTENTION.
- Bit 4 :: Occupé. Ce bit est mis à 1 par une écriture dans le registre ATTENTION ou par le microprocesseur (6) et il est remis à 0 par le microprocesseur (6) dans les cas suivants :
- Après le transfert du bloc de commande,
- Après une réinitialisation (RESET),
- Après une commande de réinitialisation (RESET) dans le registre ATTENTION,
- Après une commande de suspension (ABORT) dans le registre ATTENTION. Ce bit est toujours à 1 durant le transfert d'un bloc de commande ou d'un bloc de status.
- Bit 3 :: INTERFACE STATUS non vide. Ce bit est géré matériellement dans le circuit coupleur (4). Il indique l'état de la pile STATUS du circuit coupleur (4). Quand ce bit vaut 1, l'unité centrale peut lire un mot du bloc de l'INTERFACE STATUS.
- Bit 2 :: INTERFACE COMMANDE pleine. Ce bit est géré matériellement dans le circuit (4). Il indique l'état de la pile COMMANDE du circuit (4). Quand ce bit vaut 0, l'unité centrale peut écrire un mot du bloc de l'INTERFACE COMMANDE.
- Bit 1 :: Demande de transfert de données. Ce bit reflète l'état du signal DRQ que le circuit coupleur (4) envoie au circuit d'arbitrage du bus (2).
- Bit 0 :: Interruption. Ce bit est mis à 1 quand le microprocesseur (6) écrit le registre INTERRUPT STATUS. Si l'interruption est validée, l'interruption matérielle IRQ14 est égale à ce bit.

Le registre INTERRUPT STATUS (404) sert au circuit coupleur (4) pour interrompre l'unité centrale et l'informer du type de l'interruption. Sur écriture par le microprocesseur (6) de ce registre, l'interruption (IRQ14) survient. La structure de ce registre qui rappelle celle du registre ATTENTION est la suivante :
- Bits: 7-5 :
000 Interruption concernant une commande disque 0
001 Interruption concernant une commande disque 1
01x Réservé.
10x Réservé.
111 Interruption concernant une commande coupleur
- Bit 4 :: Réservé, toujours à 0.
- Bits: 3-0 :
0000 Réservé
0001 Commande exécutée avec succès
0010 Réservé
0011 Commande exécutée en appliquant l'ECC
0100 Réservé
0101 Commande exécutée en faisant des réessais
0110 Commande FORMAT partiellement faite. Status.
0111 Commande faite en appliquant ECC et réessais.
1000 Commande exécutée avec Warning.
1001 (Abort) Suspension accomplie
1010 (Reset) Réinitialisation accomplie
1011 Transfert de données prêt. Pas de status.
1100 Commande accomplie avec erreur.
1101 Erreur DMA ou parité. Status disponible. Il est conseillé de recommencer toute la commande.
1110 Erreur dans le bloc de commande
1111 Erreur dans ATTENTION

Dans le circuit coupleur (4), la définition des bits est indifférente, la seule action matérielle de ce registre est de positionner l'interruption (IRQ14).

Le registre 16 bits COMMAND INTERFACE (407) est utilisé par l'unité centrale pour transférer un bloc de commande au circuit coupleur (4). Le bloc de commande est généralement constitué de 2 ou 4 paramètres. Ce registre est matérialisé dans le circuit coupleur (4) par une pile FIFO (407) de 4 mots entre le bus "MCA" (1) et le bus privé (492) du microprocesseur (6). Avant d'écrire un mot dans le registre COMMANDE INTERFACE, l'unité centrale doit s'assurer qu'il n'est pas plein en consultant le registre BASIC STATUS. Grâce à la profondeur de la pile FIFO (407), l'interface apparaîtra presque toujours libre à l'unité centrale.

Le registre 16 bits STATUS INTERFACE (408) est utilisé par l'unité centrale pour récupérer un bloc de status du circuit coupleur (4). Le bloc de status est généralement constitué de 2 ou 4 paramètres. Ce registre est matérialisé dans le circuit coupleur (4) par une pile FIFO (408) de 4 mots entre le bus "MCA" (1) et le bus privé (492) du microprocesseur (6). Avant de lire un mot dans le registre STATUS INTERFACE, l'unité centrale doit s'assurer qu'il n'est pas vide en consultant le registre BASIC STATUS. Grâce à la profondeur de la pile FIFO (408), l'interface apparaîtra presque toujours libre à l'unité centrale.

L'interruption (IRQ14) permet au circuit coupleur (4) d'indiquer à l'unité centrale qu'une action vient de se terminer ou qu'une anomalie a eu lieu. L'information concernant l'interruption est dans le registre INTERRUPT STATUS (404).

L'unité centrale a la possibilité de dévalider l'interruption en mettant le bit ITEN du registre BASIC CONTROL (405) à 0.

Le microcontrôleur envoie l'interruption lorsqu'il écrit dans le registre INTERRUPT STATUS (404).

L'unité centrale a la possibilité de vérifier que l'interruption provient bien du coupleur en lisant le bit 0 du registre BASIC STATUS (406).

L'interruption retombe lorsque l'unité centrale lit ce registre INTERRUPT STATUS. Le microcontrôleur peut exceptionnellement remettre l'interruption à 0 en mettant le bit 0 du BASIC STATUS à 0. A la réinitialisation (RESET), l'interruption est inactive.

Matériellement, le signal (IRQ14) est fabriqué dans le circuit coupleur (4). Il est envoyé sur le bus MCA (1) via un circuit à collecteur ouvert (10).

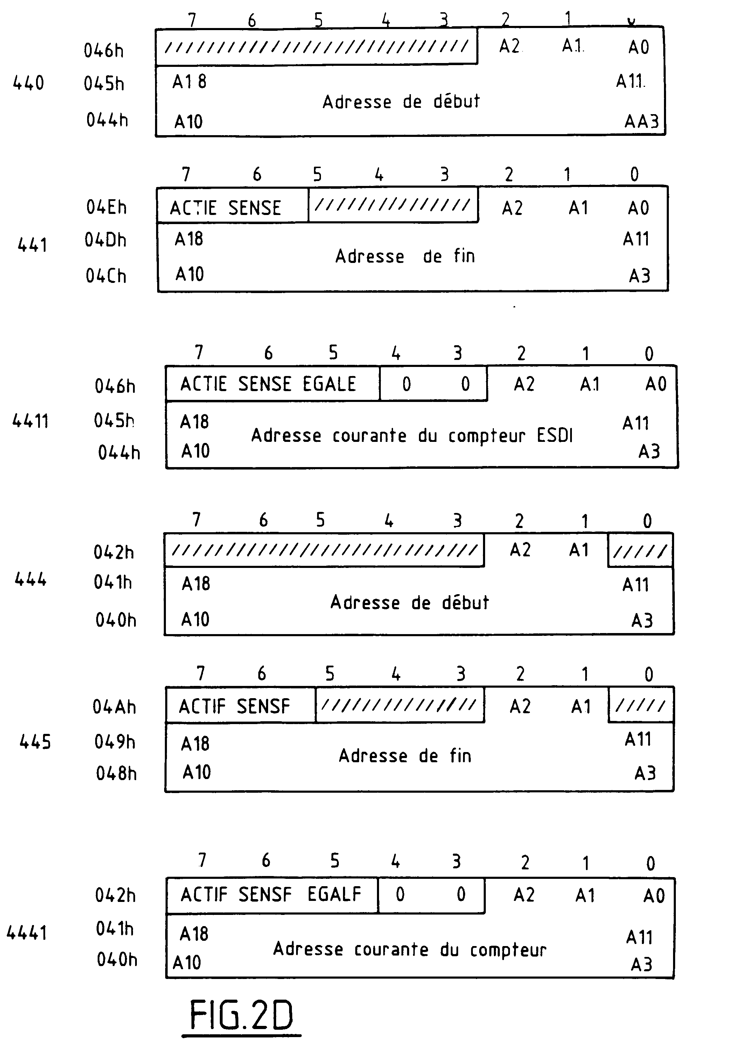

La figure 2B représente la partie mémoire du circuit (4) qui permet d'exploiter les informations stockées et cachées dans la mémoire de 256 ou 512 Koctets constituant la mémoire cache (5), et de transférer soit vers la partie disque, soit vers le bus "MCA" (1) les secteurs. Cette partie comporte un bloc (430) de contrôle de la mémoire cache (5) relié par un bus (483) à un arbitre (48). Ce circuit (430) est relié par une liaison (476) avec une pile FIFO (47) bidirectionnelle de 4 mots, elle-même connectée entre d'une part la mémoire (5) et son bus (450) par un bus interne (453) et un circuit de multiplexage interne (4500) et d'autre part le bus "MCA" par le bus (41). Le bus interne (453) communique également avec un circuit de détermination de parité qui émet ou reçoit, par la liaison (471), un bit de parité provenant de la mémoire de parité contenue dans la mémoire (5). Cette pile FIFO (47) est relié par une liaison (475) à un registre tampon (480) qui mémorise en entrée les signaux provenant des différents circuits du circuit coupleur (4) à destination de l'arbitre (48). Le bus (483) est relié par une dérivation (484) à l'entrée du registre tampon (480). La FIFO (47) reçoit par les liaisons (474) un signal RST FB provenant du registre CTL.ITGA (4091). Le circuit de contrôle de la mémoire vive dynamique constituant le cache (5) émet par la liaison (451) les signaux (RAS, CAS, WE, CSE1, CSE2) nécessaires au fonctionnement des différents cycles de la mémoire vive dynamique. Ce circuit (430) effectue le contrôle des timings de la mémoire vive dynamique et, par la liaison (434), du multiplexage d'adresses effectué par le multiplexeur (447) , dont la sortie est reliée au bus d'adresse (452). Ce multiplexeur reçoit sur une entrée les adresses provenant du bus (64) d'adresse du microprocesseur (6), lesquelles sont également envoyées à un circuit de décodage (446). Ce circuit de décodage (446) commande, par les lignes (4460), le fonctionnement de l'automate FIFO de transfert entre la pile FIFO (47) et la mémoire vive dynamique DRAM (5) comportant un circuit de butée comparateur (445), et un compteur de 18 bits (444). Le compteur (444) de cet automate FIFO est relié par un bus (4440) au multiplexeur d'adresse (447). De même, la liaison (4460) commande un automate disque (ESDI) de transfert entre le contrôleur (9) de disque et la mémoire vive dynamique (5). Cette automate comporte deux registres de préchargement (442, 443) reliés au bus de données (492) d'une part, et d'autre part reliés à un circuit de butée comparateur (440) et un compteur 18 bits (441). La sortie du compteur à 18 bits (441) est envoyée par un bus (4400) sur le multiplexeur (447). Le contenu du compteur (444) est représenté à la figure 2D et ce compteur contient l'adresse de début du transfert sur 19 bits de A0 à A18. Le contenu du comparateur (445) est représenté à la figure 2D, et ce comparateur (445) est chargé avec l'adresse de fin constituée par les bits A1 à A18.

Le sixième bit du registre de butée situé à l'adresse héxadécimale 04A constitue l'information SENSF qui indique le sens du transfert.

Le septième bit du registre de butée constitue l'information ACTIF qui, lorsqu'il est mis à "1", active l'automate de façon à ce que l'arbitre prenne en compte les requêtes de l'automate. Lorsqu'il est mis à zéro, le bit ACTIF bloque les transferts FIFO. Ce bit ACTIF est transmis par la liaison (481) au registre (480). L'état du compteur (444) est visible en cours de transfert, et se trouve représenté par l'information (4441) de la figure 2D. Les bits A1 à a18 constituent l'adresse courante du compteur, les sixième et septième bits représentent les mêmes informations ACTIF et SENSF, et le cinquième bit de l'adresse 042 représente l'information EGALF qui vaut "1", si la valeur du compteur est égale à la valeur de l'adresse de fin contenue dans la butée, et dans ce cas génère le signal ITF envoyé au registre STATUS ITGA (4090, figure 2A). La butée (445) reçoit également le signal RST ITF de remise à zéro du bit EGALF. Ce signal RST ITF est fourni par le registre CTL ITGA (4091)..

De même, le contenu des registres (441) formant le compteur de l'automate ESDI et du registre formant le comparateur (440) est identique et est formé par l'adresse respectivement de fin et de début de transfert. Le registre de butée, situé à l'adresse 04E, contient les informations ACTIE et SENSE, qui ont la même signification que pour les registres ACTIF et SENSF, appliquées à un transfert entre le contrôleur de disque (9) et la- mémoire DRAM (5). L'automate disque (ESDI) est doté de registres de préchargement (442, 443) qui permettent de charger 5 des 6 octets constituant les informations à inscrire dans le compteur (440) et le registre comparateur (441) pendant que l'automate est actif sans le pertuber.

Le registre de butée situé à l'adresse 04E héxadécimale est le seul des six registres à ne pas avoir de préchargement. Il ne doit donc être écrit que si l'automate est inactif. Sur écriture par le microprocesseur (6) de ce registre, les 5 autres registres de préchargement (442, 443) se recopient dans le compteur (440) et le comparateur (441). Les registres butée 04A et 04E doivent donc être écrit en dernier car c'est eux qui peuvent lancer l'automate. L'état du comparateur butée est visible et lisible et est représenté par la référence (4411). Comme précédemment, le cinquième bit du registre 046 contient l'information EGALE envoyée sur la ligne (486) au registre (480) de l'arbitre (48), et cette information vaut "1" si la valeur du compteur est égale à la valeur de fin contenue dans la butée.

Ce circuit reçoit par la ligne (694), les requêtes d'échange disque (ESDI) symbolisées par le signal (EDRQ). Ce signal est envoyé sur un circuit de masquage de requête (495), lequel reçoit sur deux autres entrées les signaux (4940, 4941) émis par un registre MODE (494) chargé par le microprocesseur (6), à travers le bas (492). Les bits 0 et 1 de ce registre MODE (494) représentent le temps de masquage de la requête d'échange disque (ESDI) qui peut être codé selon le tableau suivant :
00 = 40ns
01 = 80ns
10 = 120ns
11 = 160ns

En fonction de ce code disponible sur les lignes (4940, 4941), le signal (EDRQ) envoyé par le contrôleur de disque (9) est masqué pendant le temps programmé pour éviter que, dans le cas où ce signal traîne, l'arbitre le prenne en compte et relance immédiatement un autre transfert après le transfert d'un octet. Le bit 2 du registre MODE n'est pas affecté ; le bit 3 du registre MODE permet de choisir une des deux périodes de rafraîchissement qui peut être de 10,24 microsecondes dans le cas où sa valeur est "0", ou 12,80 microseconde dans le cas où sa valeur est "1". Ce bit (3) est envoyé par la ligne (4943) à un circuit d'horloge de rafraîchissement (496) dont la sortie délivre par la ligne (489) les requêtes de rafraîchissement (REFR) au circuit d'arbitrage (48).

Le bit 4 du registre (492) permet de mettre le circuit (4) en mode test pour tester le silicium chez le fondeur. A la mise en route et en utilisation, il est mis à zéro. Le bit 6 de ce registre (492) permet de mettre à zéro la pile FIFO COMMAND INTERFACE (407). Ce bit constitue le signal RST CMD, représenté à la figure 2A et envoyé sur la pile COMMAND INTERFACE (407). Ce bit est actif seulement durant la durée de l'écriture. De même, le bit 7 du registre (492) permet de mettre à zéro la pile FIFO STATUS INTERFACE. Ce bit est actif lorsqu'il est à "1" et constitue le signal (RST STAT), de la figure 2A envoyé à la pile "STATUS INTERFACE" (408). Le circuit (430) recevant le signal d'horloge CLK1 et son signal décalé de 30ns, CLK1D, génère en plus des signaux de commande du multiplexeur (447) et de séquence de la mémoire vive dynamique (5), un signal d'incrémentation (INCF) envoyé sur l'entrée du compteur (444) et un signal d'incrémentation (INCE) envoyé sur l'entrée du compteur (440). Ces signaux servant à incrémenter les compteurs respectifs (444, 440). Le circuit (4) comporte en outre un registre STATUS ITGA (4090) et un registre CTL-ITGA (4091). Dans le registre STATUS ITGA, les quatres bits de poids fort permettent de savoir quelle source génère le signal d'interruption (ITGA) à destination du microprocesseur (6). Ainsi, le huitième bit, représentant le signal (ITP) -interruption parité- indique qu'il y a eu une erreur de parité détectée par le circuit de parité (470) et envoyé par la ligne (471) sur le registre (4090) durant une lecture de la DRAM (5). Le septième bit représentant le signal (ITE) indique une interruption disque (ESDI), c'est-à-dire que l'automate (ESDI) est arrivé en butée et que le transfert est terminé. Le sixième bit représentant le signal (ITF) indique une interruption pile FIFO, c'est-à-dire que l'automate FIFO est arrivée en butée, le transfert étant terminé. Le cinquième bit représentant le signal (ITTC) indique une interruption due au signal (TC) du bus "MCA" (1) qui indique un transfert "MCA" terminé. Le quatrième bit de ce registre représentant le signal REQE indique une requête d'échange disque (ESDI). Dans le cas où ce signal est à "1" et que l'automate (ESDI) est arrêté, ceci indique au système qu'il faut relancer l'automate.

Le bit (2) du registre représente le signal (ACTIE) qui indique l'activité de l'automate (ESDI). Cette automate est actif lorsque le signal (ACTIE) est à 1. Le bit (1) représente le signal (REQF) indiquant une requête FIFO. Si ce signal est à 1, l'automate FIFO est arrête. Le bit (0) représente le signal (ACTIF) indiquant une activé de l'automate FIFO. Si ce signal est à 1, l'automate est actif.

Le registre CTL ITGA (4091) permet au microprocesseur (6) de remettre à zéro une ou plusieurs des 4 interruptions et de les valider ou de les invalider.

Le bit (7) de ce registre représente le signal (RST FB) qui, envoyé sur la ligne (474), sert dans la partie mémoire (figure 2B) pour mettre à zéro la FIFO tampon (47).

Le bit (6) du registre représente l'information (RST P) qui, envoyée sur la ligne (471), sert à remettre l'interruption PARITE à zéro. Si on le laisse à "1", cela invalide aussi la parité.

Le bit (5) du registre représente l'information (EN ITE) qui valide l'interruption (ESDI) ITE. Mis à 1, ce bit autorise l'interruption (ESDI).

Le bit (4) du registre représente l'information (RST ITE) qui remet à zéro l'interrupticn (ESDI) ITE. Lorsque le microprocesseur (6) écrit ce bit à "1", cela fait descendre l'interruption ITE due à l'automate (ESDI).

Le bit (3) du registre représente l'information (EN ITF) qui valide l'interruption ITF de la FIFO. Mis à "1", ce bit autorise l'interruption FIFO (ITF).

Le bit (2) du registre représente l'information (RST ITF) qui remet à zéro l'interruption FIFO. Lorsque le microprocesseur (6) écrit ce bit à "1", cela fait descendre l'interruption ITF due à l'automate FIFO.

Le bit (1) du registre représente l'information (EN ITTC) qui valide l'interruption TC. Mis à 1, ce bit autorise l'interruption (ESDI) ITE.

Le bit (0) du registre représente l'information (RST ITTC) qui remet à zéro l'interruption TC. Lorsque le microprocesseur (6) écrit ce bit à "1", cela fait descendre l'interruption due au signal TC du bus "MCA" (1).

Les registres STATUS ITGA et CTL, ITGA permettent de gérer le multiplexage des différentes interruptions qui génèrent le signal ITGA à destination du microprocesseur (6). Cette interruption ITGA peut être activée lorsque l'automate (ESDI) est arrivé en butée, l'automate FIFO est arrivée en butée, lorsque le bus "MCA" indique par son signal TC qu'un transfert DMA est fini, et lorsqu'une erreur de parité a été détectée. Le microprocesseur reçoit également une interruption ATN, générée lorsque l'unité centrale écrit dans le registre (ATTENTION) (403). Enfin, le microprocesseur (6) reçoit une interruption CMDC après l'exécution d'une commande.

Le circuit coupleur (4) comprend également des compteurs (496, 497) permettant de déterminer le numéro du secteur à partir d'impulsions formées par la base de temps programmée en conséquence. Ces compteurs (496, 497) sont remis à zéro par les signaux (INDEX 1, INDEX 2) délivrés respectivement par les lecteurs de disque 1 et disque 2. La base de temps du secteur de chaque disque est déterminée par le microprocesseur (6) en fonction des caractéristiques de chaque disque.

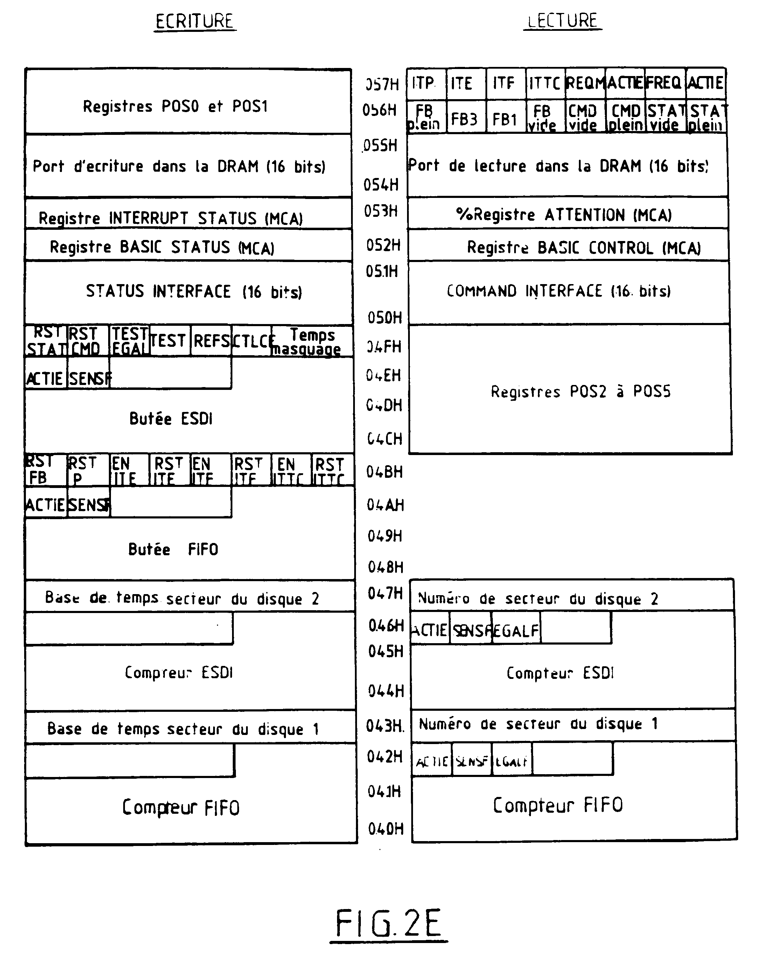

La figure 2E représente les adresses d'accès aux différents registres du circuit coupleur (4) lorsque l'on accède à celui-ci en écriture ou en lecture.

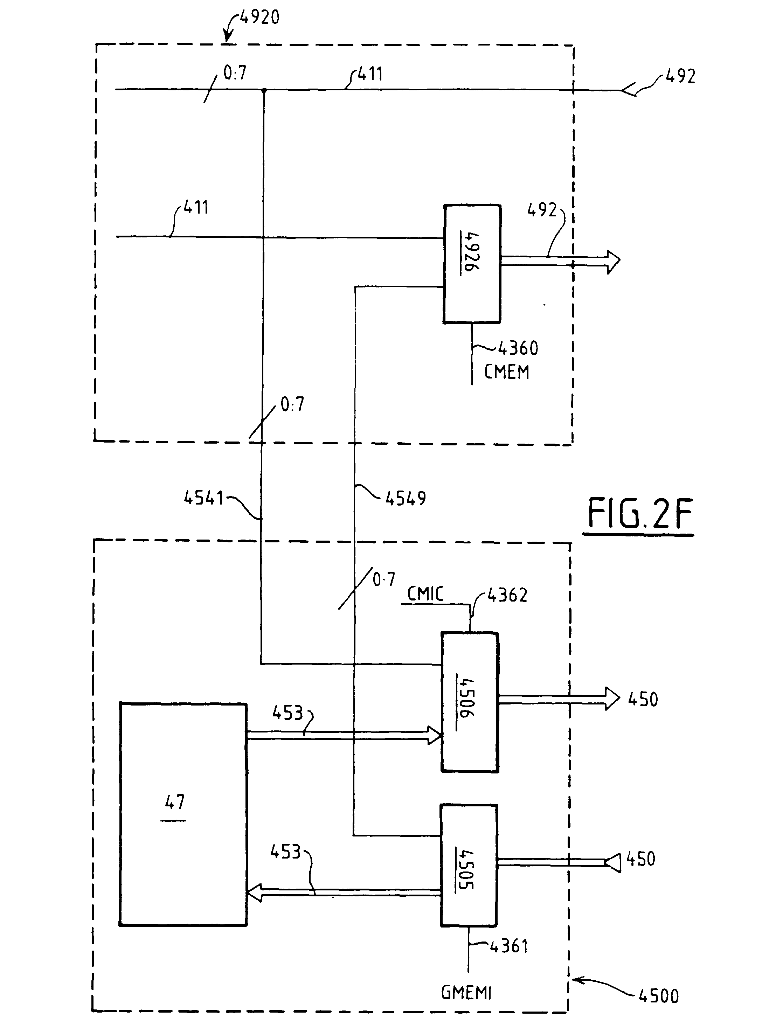

La figure 2F représente le dispositif de multiplexage interne au circuit coupleur (4) pour permettre une communication entre les différents bus de données (492, 450, 41) de la carte. Ainsi un premier multiplexeur (4505) relie en entrée la mémoire (5) soit à la pile bidirectionnelle (47) par le bus 453, soit par un bus interne (4549) à un deuxième multiplexeur (4626). Ce deuxième multiplexeur (4626) en direction du microprocesseur (6) ou du contrôleur ESDI (9) les données venant soit de la mémoire (5), soit par le bus interne 411 des registres 401 à 409 du circuit coupleur (4). Ce deuxième multiplexeur est commandé par un signal (CMEM) provenant d'une sortie (4360) des trois lignes de sortie 436 (0:2) du bloc de contrôle (430). Le premier multiplexeur est commandé par un signal GMEMI provenant d'une deuxième sortie 4361 des trois lignes (436). Un troisième multiplexeur (4506) commandé par un troisième signal CMIC provenant de la sortie (4362) du bloc de contrôle (430) permet d'envoyer les données provenant soit de la pile bidirectionnelle (47) par le bus interne (453) vers le bus (450) de la mémoire (5), soit par le bus (454) les données provenant des registres (401 à 409) ou les données du microprocesseur (6) ou du controleur ESDI (9) provenant du bus de donnée (492).

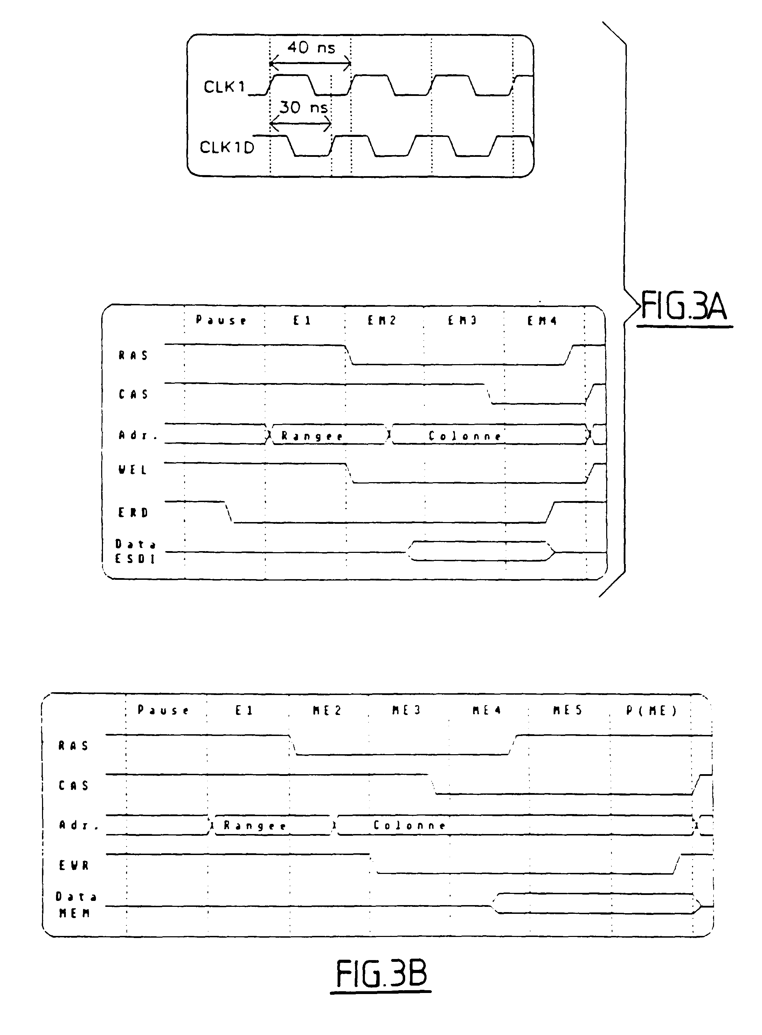

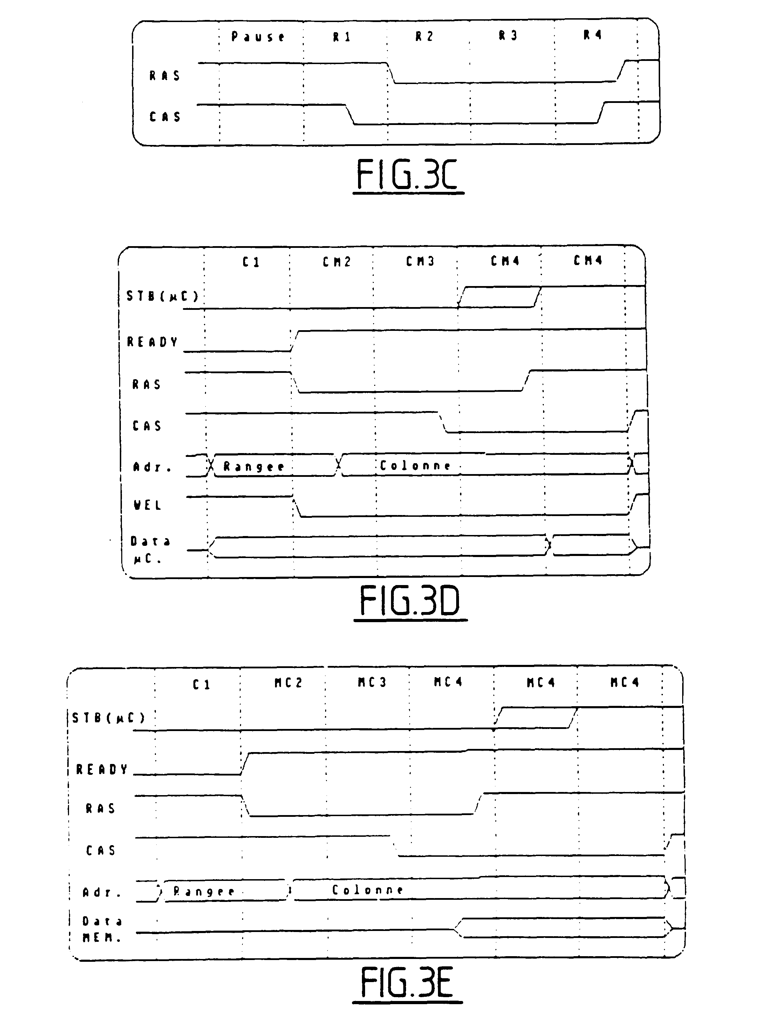

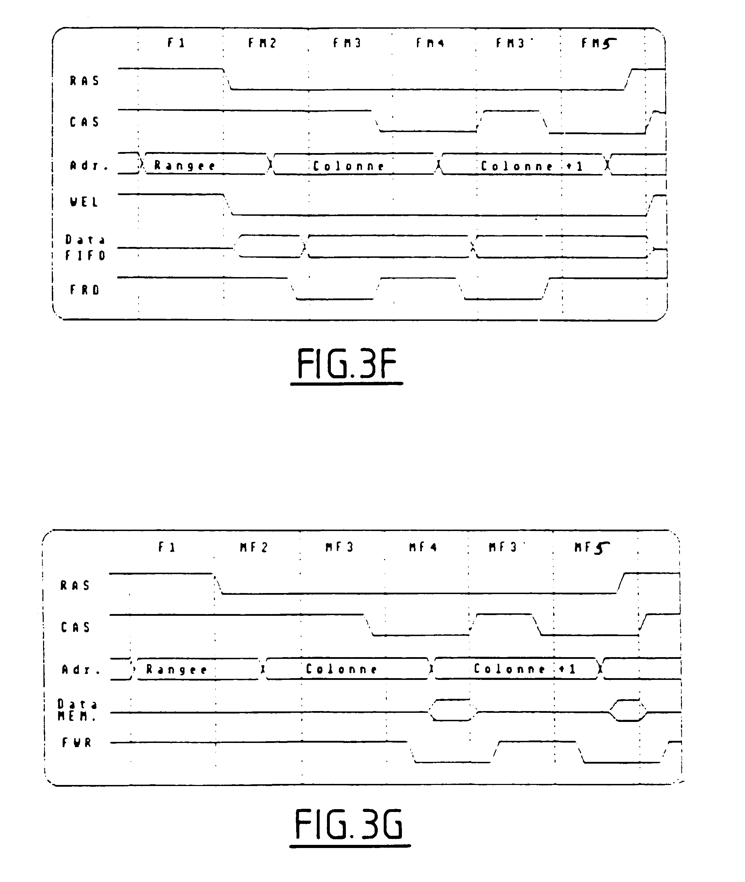

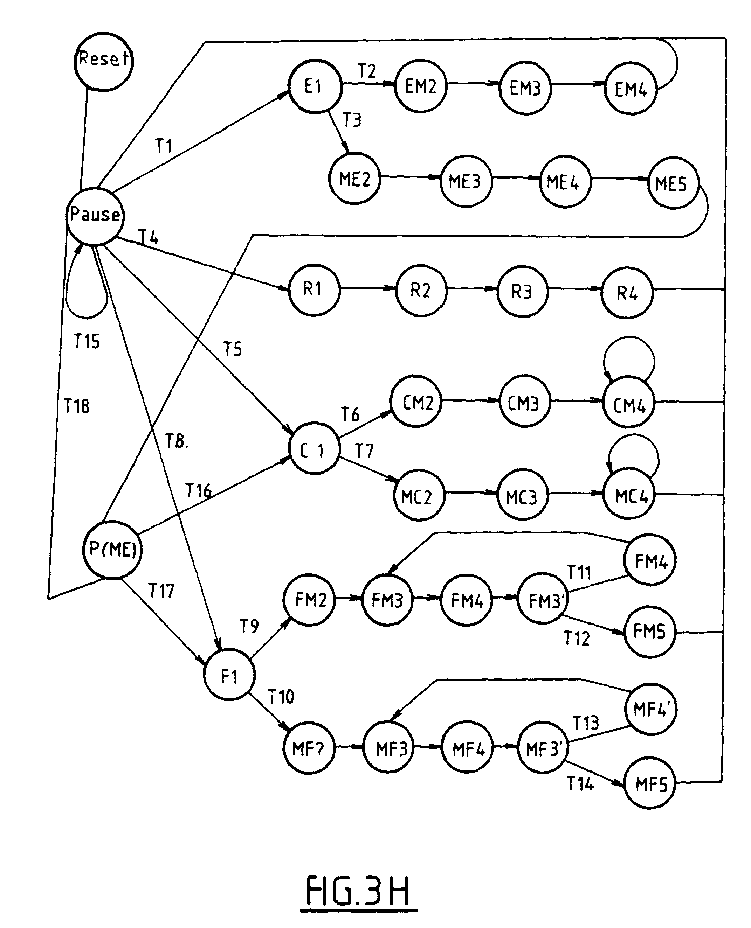

Ce circuit coupleur (4) permet différents types d'accès et timings qui sont indiqués aux figures 3. Ces timings sont obtenus avec une horloge de 25 Mhz représentée par le signal (CLK1) et son signal décalé de 30ns (CLK1D). Chaque cycle est découpé en pas de 10ns. La figure 3H représente les ordres de priorité des différentes séquences d'accès ou d'échange correspondant aux diagrammes des figures 3A à 3G et dans chaque séquence l'enchaînement des différents cycles.

La figure 3A représente les diagrammes temporels des accès du contrôleur de disque (9) vers la mémoire (5), et les signaux générés par l'arbitre (48) pour gérer cet échange. Le contrôleur de disque émet pendant le cycle de pause sur la ligne (56) le signal EDRQ, l'arbitre (48, fig. 2B) sur réception de ce signal transformé en un signal ESDI (488) et de l'adresse fournie pendant le cycle El, génère la séquence des signaux RAS, WEL pendant le cycle EM2, CAS pendant le cycle EM3, nécessaires à l'inscription des données dans la mémoire (5) et le signal ERD pour commander un transfert du contrôleur disque (9) vers la mémoire (5). Dans le cas d'une écriture disque ce sera le signal EWR qui sera généré. L'accès du contrôleur de disque (9) à la mémoire (5) est, comme on peut le voir sur la figure 3H, le plus prioritaire. En effet, sur cette figure les séquences des différents diagrammes temporels ont été représentés et chaque cycle (par exemple El à EM4) d'une séquence est représenté par une bulle représentant 40ns ; chaque séquence d'accès étant classée du haut vers le bas en ordre prioritaire décroissant. Ainsi, lorsqu'une requête du contrôleur de disque (9) est émise, un seul transfert d'un octet est effectué et après ce transfert, la requête du contrôleur (9) est masquée à l'arbitre (48) pendant un temps programmable de 40 à 160ns à l'aide du registre MODE (494) du circuit (4). L'adresse de transfert a été chargée préalablement dans l'automate (ESDI) par le microprocesseur (6).

La figure 3B représente les accès de la mémoire (5) vers le contrôleur de disque (9), dans ce cas le microprocesseur (6), après avoir chargé l'adresse mémoire à partir duquel le transfert doit s'effectuer dans le compteur (440) de l'automate (ESDI), et après avoir fixé la butée, permet par le signal ACTIE de lancer l'arbitre qui va générer les cycles RAS, CAS nécessaires et le signal EWR à destination du contrôleur de disque (9).

La figure 3C représente le diagramme des séquences d'un cycle de rafraîchissements qui est le deuxième accès le plus prioritaire après les échanges avec le disque ; ces accès de rafraîchissements sont demandés par l'horloge interne (496) du circuit (4) dont la fréquence dépend de la programmation du bit 3 du registre MODE (494) du circuit (4). Un rafraîchissement s'effectue sur les deux bancs de mémoire (5) simultanément et en utilisant le MODE CAS avant RAS.

La figure 3D représente la séquence des signaux pour exécuter un accès du microprocesseur vers la mémoire (5) et la figure 3E représente un accès de la mémoire (5) vers le microprocesseur (6). Le microprocesseur (6) ne peut accéder à la mémoire que si celle-ci n'est pas occupée. Si la mémoire est occupée ou si un accès plus prioritaire est demandé, le circuit coupleur (4) fait attendre le microprocesseur (6) en désactivant son signal READY jusqu'à ce que la mémoire soit de nouveau accessible. Le microprocesseur (6), après avoir fourni les signaux d'adresse, rangée et colonne, envoie les signaux de donnée sur le bus (492) et le circuit (430) de contrôle de la mémoire génère les signaux RAS, CAS et WEL nécessaires à l'écriture des données disponibles sur le bus (492). Le microprocesseur génère ensuite le signal STB qui correspond sur l'entrée (487) du circuit d'arbitrage (48) au signal de requête REQ.

Les accès les moins prioritaires sont les accès représentés aux figures 3F et 3G, constituées par des accès entre la pile bidirectionnelle (47) et la mémoire (5). Ces accès n'ont lieu que s'il n'y a aucune autre requête et si l'automate FIFO est actif, c'est-à-dire si le compteur (444) et la butée (445) ont été chargés par le microprocesseur (6), ce qui positionne le bit ACTIF du registre butée (445). Un accès pile peut transférer plusieurs octets en rafale. Le nombre d'octets est toujours pair et la rafale dûre tant que le circuit coupleur (4) maintient le signal DRQ (435) à destination du circuit coupleur (2). La longueur des rafales est déterminée par les bits 6 et 7 du registre POS 3 (402). L'arbitre (43) profite du MODE PAGE des mémoires pour effectuer les transferts en rafale. Dans la figure 3F, lorsque les données sont présentes sur le bus (41) en entrée de la pile, le circuit de contrôle (430) génère le signal FRD qui permet d'effectuer le transfert des données de la pile (47) vers la mémoire (5). Le signal (WEL), généré par le circuit de contrôle (430) de l'arbitre à destination de la mémoire (5) , permet l'écriture de celle-ci. En lecture de la mémoire (5) vers la pile (47), comme représenté à la figure 3G, le circuit de contrôle (430) de l'arbitre génère les signaux d'adresse, les signaux RAS, CAS, et lorsque la mémoire (5) présente ses données, génère le signal FWR qui permet l'inscription de celle-ci dans la pile (47).

Dans les accès processeurs des figures 3D et 3E, l'adresse de rangée est transmise par le bus (645) et la porte (45) vers la mémoire (5), et l'adresse colonne entre dans le circuit coupleur (4) par le bus (64) et sort par le multiplexeur (447) sur le bus (452) de la DRAM.

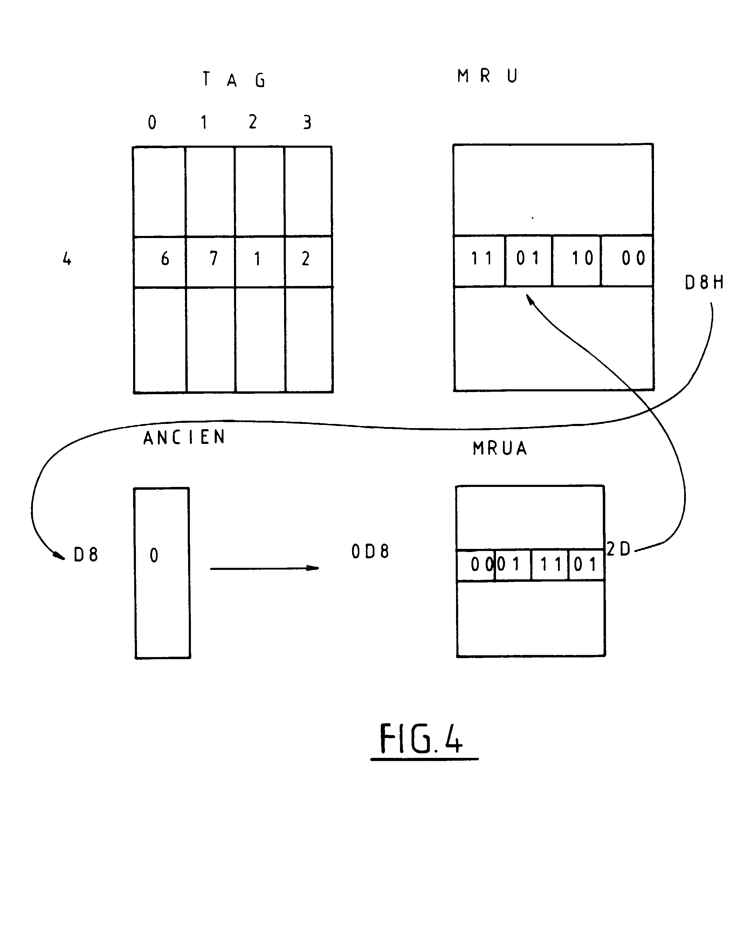

La mémoire (8) du type EPROM contient le programme de management de l'ensemble des circuits de la carte qui va permettre au microprocesseur (6), en fonction des signaux échangés entre le contrôleur de disque (9) et lui-même, ou lui-même et le circuit coupleur (4), de déclencher les cycles d'accès que l'on a décrit précédemment à l'exception du cycle de rafraîssement qui est déclenché par l'horloge de rafraîchissement (490) du circuit (4). Le microprocesseur (6) à l'aide de son programme (8) a donc pour rôle d'interpréter les commandes provenant de l'unité centrale par le bus "MCA" (1), de programmer les automates du circuit coupleur (4) pour effectuer les transferts, et de commander le contrôleur de disque (9). En outre, ce microprocesseur (6) gère les tables nécessaires au fonctionnement de la mémoire cache (5). Ces tables se trouvent dans la mémoire (8) et comprennent une table d'allocation du cache qui est lui-même structuré en 128 lignes de 4 voies. Les secteurs du disque sont organisés en bloc dont la taille maximale est la longueur de la piste. Le rangement des blocs est fait suivant le numéro d'adresse relative du bloc (RBA) dans la matrice à 128 lignes et 4 colonnes ; les lignes correspondent à l'ordre croissant des poids faibles de l'adresse (RBA), et les colonnes à des blocs de même poids faible, mais de poids fort différent de (RBA). Le nombre de colonnes, appelé nombre de voies, est égal à 4. Ainsi, par exemple, les blocs d'adresse relatifs (64, 74, 14 et 24, fig. 4) seront classés à la ligne (4) et les colonnes 0 à 3 contiendront successivement les informations correspondant aux blocs (64, 74, 14, 24, fig. 4). La table (TAG) d'allocation du cache contient donc un nombre de lignes correspondant aux poids faibles de l'adresse relative des blocs, et dans 4 colonnes successives, les poids forts des adresses des blocs rangés dans la mémoire cache. Dans l'exemple cité, cette table (TAG) contient à la ligne (4) les valeurs (6, 7, 1, 2) rangées dans les colonnes respectives (0, 1, 2, 3). A cette table (TAG) est associée une table (MRU) contenant à la ligne correspondante de la table (TAG) des valeurs associées à chaques voies représentant, de façon codée sur deux bits, l'ancienneté de l'utilisation de la voie concernée. Sur l'exemple représenté à la figure 4, la voie la plus ancienne a la valeur la plus élevée et est donc constituée par la voie contenant le bloc (64). Lorsqu'un accès disque est effectué, le microprocesseur (6) vient lire la table (TAG) pour s'assurer que le bloc recherché n'est pas contenu dans la mémoire cache. Lorsque ce bloc n'est pas contenu, le microprocesseur commande au contrôleur de disque (9) une lecture qui va, par exemple, dans le cas où l'on veut lire le bloc (54), permettre la lecture de celui-ci et le microprocesseur (6) va commander le transfert de ce bloc dans la mémoire cache (5) à l'adresse mémoire dans laquelle le bloc le plus ancien était contenu. Pour décider à quel emplacement le bloc, ou secteur, lu doit être inscrit et actualiser la valeur de la table (MRU), le microprocesseur (6) utilise un premier tableau (ANCIEN) et un deuxième tableau MRUA moins récemment utilisé et actualisé. Ces deux tableaux sont également contenus dans la mémoire (8). La lecture du contenu du tableau (MRU) à la ligne correspondant à l'adresse RBA donne une valeur héxadécimale (D8, pour l'exemple considéré) qui sert d'adresse pour le premier tableau (ANCIEN). Le contenu du premier tableau (ANCIEN) à l'adresse (D8) indique le numéro, en l'occurence 0, de la colonne dans laquelle le bloc doit être remplacé et ce numéro de colonne associé au contenu du tableau MRU constitue une adresse, ici dans l'exemple considéré (0D8), qui permet de lire dans le deuxième tableau MRUA la nouvelle valeur du contenu à substituer dans le tableau (MRU) à l'adresse (4) correspondant au poids faible du bloc. Dans l'exemple considéré, cette valeur héxadécimale (2D) constitue en fait le nouveau codage du tableau (MRU) qui indique que la voie "0" est la plus récemment utilisée, puisque c'est celle dans laquelle on aura introduit le bloc (54). Ce mécanisme utilisé en lecture ou en écriture est associé au signal index qui permet de remettre à "0" le compteur de secteur, ce signal index étant envoyé par le contrôleur de disque (9) chaque fois que la tête de lecture passe devant le secteur "0", permet de remettre à "0" le compteur de chaque disque, et de relancer l'incrémentation des compteurs au rythme des bases de temps programmées par le microcontrôleur en fonction des caractéristiques des disques auxquels la carte est accouplée. Ceci permet de connaître en permanence la position de la tête et en cours de déplacement de celle-ci pour rechercher un secteur, de stocker dans la mémoire cache des secteurs non demandés qui pourront être conservés en vue d'une utilisation ultérieure. Au cours de ces stockages, la table (TAG) d'allocation du cache est mise à jour selon le mécanisme indiqué ci-dessus. Ce mécanisme permet d'anticiper la lecture de certaines portions du disque et de limiter ainsi une demande d'accès à un secteur de disque faite par le bus "MCA" à une lecture de la mémoire cache dans la mesure où cette mémoire contient déjà le secteur à lire. Dans le cas où elle ne le contient pas, le transfert s'effectue du disque vers la mémoire cache et ensuite de la mémoire cache par un accès pile vers le bus "MCA".

## Revendications

1. Circuit coupleur (4) entre un circuit contrôleur de disque (9), un microprocesseur (6), une mémoire cache dynamique (5) communiquant avec un processeur central à travers un bus (1), ledit circuit coupleur comprenant des moyens de gérer les transferts entre le contrôleur disque et la mémoire cache, caractérisé en ce que :
- lesdits moyens (4926, 4505, 4506, 430, 48) de gérer les transferts entre le contrôleur disque (9) et la mémoire cache (5) après initialisation par le processeur ont la priorité la plus élevée ; et en ce que ledit circuit coupleur comporte
- des moyens (430) de gérer en tant que deuxième accès le plus prioritaire les cycles de raffraichissement de la mémoire dynamique (5) constituant le cache ;
- des moyens (4920, 4500, 447, 64, 441, 445) de gérer les accès du microprocesseur (6) à la mémoire cache (5) ;
- des moyens (430, 48, 4500) de gérer dans les deux sens avec la priorité la plus faible les accès liés aux transferts entre la mémoire cache (5) et une pile (47) bidirectionnelle connectée à celle-ci et audit bus (1), ladite pile (47) étant incorporée au circuit coupleur, après initialisation par le microprocesseur (6).

2. Circuit coupleur selon la revendication 1, caractérisé en ce qu'il comporte un circuit d'arbitrage (48), une pile (47) bidirectionnelle de 4 mots commandée par un automate de pile, un circuit contrôleur (430) délivrant un signal de sens de fonctionnement de la pile en fonction des informations délivrées par un registre de butée de l'automate de pile et un comparateur (445) de l'automate de pile préalablement chargé par le microprocesseur (6) avec l'adresse de démarrage des échanges avec la mémoire cache (5), le registre butée étant chargé avec l'adresse de fin d'échange et avec un bit de validation (ACTIF) du circuit d'arbitrage.

3. Circuit coupleur selon la revendication 1 ou 2, caractérisé en ce qu'il comporte un automate de gestion des transferts entre le circuit contrôleur (9) de disque et la mémoire cache (5), ledit automate de gestion comportant un registre (440) contenant l'adresse de début de transfert de la mémoire, et un registre (441) de butée et comparateur contenant l'adresse de fin de transfert, et un bit de validation (ACTIE) du circuit d'arbitrage (48).

4. Circuit coupleur selon l'une des revendications 1 à 3, caractérisé en ce que les registres butée comparateurs de pile (445) et de transfert disque (441) comportent un bit d'indication de l'égalité des valeurs contenues dans la butée (445, 441) et dans le registre compteur (440, 444) incrémentés pour arrêter l'arbitre.

5. Circuit coupleur selon la revendication précédente, caractérisé en ce que le circuit contrôleur (430) délivre les signaux d'incrémentation (INCF, INCE) des compteurs (440, 444), des automates de pile et respectivement de disque.

6. Circuit coupleur selon l'une des revendications 3 à 5, caractérisé en ce que l'automate de transfert disque mémoire comporte deux registres de préchargement (442, 443) permettant de précharger le contenu des registres compteur (444) et butée (441) pour accélérer un transfert disque mémoire.

7. Circuit coupleur selon l'une des revendications 1 à 6, caractérisé en ce qu'il comporte un registre (MODE) (494) et une horloge de rafraîchissement (496) dont la période est paramétrable par le contenu du troisième bit du registre (MODE) (494).

8. Circuit coupleur selon l'une des revendications précédentes, caractérisé en ce que les bits 0 et 1 du registre (MODE) sont envoyés sur un circuit (495) de masquage de requête de transfert disque pour paramétrer le temps de masquage de transfert des requêtes demandées par le microprocesseur (6).

9. Circuit coupleur selon une des revendications 1 à 8, caractérisé en ce qu'il comporte des compteurs (496, 497) incrémentés par une horloge paramétrée en fonction des caractéristiques du disque, et un signal index de détection du passage du secteur "0" délivré par le circuit contrôleur de disque (9) et servant à réinitialiser le compteur de secteur (496, 497) d'un disque.

10. Circuit coupleur selon une des revendications 1 à 9, caractérisé en ce que le circuit contrôleur (430) établit en outre les séquences de signaux (RAS, CAS, WE, CSE1, CSE2) nécessaires au fonctionnement de la mémoire cache (5).

11. Circuit coupleur selon une des revendications 1 à 10, caractérisé en ce qu'il comporte un circuit de contrôle (470) de la parité des données écrites dans la mémoire cache (5) pour générer une interruption à destination du microprocesseur (6) en cas de non concordance entre la parité lue et celle calculée par le circuit de parité (470).

12. Circuit coupleur selon une des revendications 1 à 11, caractérisé en ce qu'il comporte une pile (COMMAND INTERFACE) (407), une pile d'état d'interface (408), un registre d'état de base (406), pour permettre au processeur central de consulter l'état des piles lesdites piles étant connectées, d'une part au bus "MCA" (1), et d'autre part au bus de donnée du microprocesseur (6), la pile (COMMAND INTERFACE) (407) étant utilisée par le processeur central pour transférer un bloc de commande au circuit coupleur (4) et la pile état des interfaces (408) étant utilisée par le processeur central pour récupérer un bloc d'état.

13. Circuit coupleur selon la revendication 12, caractérisé en ce qu'il comporte en outre un registre (ATTENTION) connecté entre le bus "MCA" et le bus donnée du microprocesseur pour indiquer au microprocesseur (6) que le processeur central veut envoyer une nouvelle commande.

14. Circuit coupleur selon la revendication 13, caractérisé en ce qu'il comporte en outre un registre état des interruptions (404) pour interrompre le processeur central et l'informer du type d'interruption.

15. Circuit coupleur selon la revendication 14, caractérisé en ce qu'il comporte un registre état (ITGA) (4090) indiquant au microprocesseur (6) la source ayant générée une interruption à destination du microprocesseur (6).

16. Circuit coupleur selon la revendication 15, caractérisé en ce qu'il comporte un registre de contrôle CTL ITGA (4091) pour permettre au microprocesseur (6) de remettre à "0" les informations du registre état (ITGA) (4090).

17. Circuit coupleur selon la revendication 12, caractérisé en ce qu'un bit du registre d'état de base (406) est utilisé pour indiquer une demande de transfert de données en générant un signal (DRQ) du circuit coupleur vers le circuit d'interface (2) de la carte.

18. Carte d'interface entre un bus "MCA" (1) et un lecteur de disque ladite carte d'interface comportant un circuit contrôleur de disque (9), un microprocesseur (6), une mémoire cache (5), et un circuit coupleur (4) selon une des revendications précédentes, caractérisée en ce que le contrôleur de disque (9) communique par un circuit de multiplexage (490, 491) avec deux bus de données (492, 450), un premier bus (492) communiquant avec le microprocesseur (6) et le circuit coupleur (4) et un second bus (450) communiquant avec la mémoire cache (5) et le circuit coupleur (4), le microprocesseur (6) communique par un bus d'adresse avec une mémoire vive statique (7), une mémoire non volatile (8) contenant le logiciel de gestion des échanges entre le disque et la mémoire cache (5) ou entre la mémoire cache (5) et le bus "MCA" (1) et des tables pour la gestion de la mémoire cache.

19. Carte d'interface selon la revendication 18, caractérisée en ce que le circuit coupleur (4) communique par un bus de données (41) avec le bus "MCA" (1) et une mémoire morte (3) contenant le logiciel d'entrée/sortie de base de la carte d'interface avec le système.

20. Carte d'interface selon la revendication 19, caractérisée en ce que le circuit coupleur (4) communique par un bus d'adresse (492) d'une part avec la mémoire morte (3), et d'autre part par une porte de validation (12) avec le bus "MCA" (1), ledit circuit coupleur (4) échangeant des signaux de contrôle avec un circuit d'arbitrage de bus (2) connecté au bus d'adresse du bus "MCA" (1) et échangeant des signaux de contrôle avec ce bus "MCA" (1).

21. Carte d'interface selon une des revendications 18 à 20, caractérisé en ce que le microprocesseur (6) gère les tables de gestion de la mémoire cache ;
- interprète les commandes provenant de l'unité centrale ;
- programme les automates du circuit coupleur (4) ;
- commande le circuit contrôleur de disque (9).

22. Procédé de gestion des échanges entre un processeur central et un circuit coupleur (4) entre circuits contrôleur de disque (9), un microprocesseur (6) et une mémoire cache dynamique (5) caractérisé en qu'il consiste :
à gérer avec la priorité la plus élevée les transferts entre le contrôleur de disque (9) et la mémoire cache (5), après initialisation par le microprocesseur (6) ;
à gérer en tant que deuxième accès le plus prioritaire les cycles de rafraîchissement de la mémoire dynamique (5) constituant le cache ;
à gérer les accès du microprocesseur (6) à la mémoire cache (5) ;
à gérer dans les deux sens avec la priorité la plus faible les accès entre la mémoire cache (5) et une pile bidirectionnelle (47) connectée à celle-ci et à un bus (1) de communication avec le processeur central, après initialisation par le microprocessor

23. Procédé de gestion des échanges selon la revendication 22, caractérisé en ce qu'il comporte une étape de génération d'une interruption (ATN) par le circuit coupleur (4) à destination du microprocesseur (6) du coupleur.

24. Procédé de gestion des échanges selon la revendication 22 caractérisé en ce qu'il consiste à programmer le "DMA" du circuit coupleur (4) et à valider le canal d'accès mémoire direct sur le coupleur (4), après avoir reçu une interruption de transfert (READY) générée par le code formé par les 3 bits du registre d'état des interruptions (404) écrit par le microprocesseur (6) ;
à valider un bit (DMA ENB) du registre de contrôle (BASIC CONTROL) (405) pour valider le canal d'accès mémoire direct sur le coupleur.

25. Procédé de gestion des échanges selon la revendication 24 caractérisé en ce qu'il comporte une étape de validation d'un bit (ITEN) du registre de contrôle (BASIC CONTROL) (405) pour valider les interruptions générées par le coupleur à destination du processeur central.

26. Procédé de gestion des échanges, selon une des revendications 18 à 21, caractérisé en ce que la mémoire cache (6) est divisée en 4 voies et la mémoire EPROM (5) contient une table d'allocation (TAG) de la mémoire cache (6), représentant l'identification du secteur ou portion de secteur contenu dans chaque voie d'une ligne de cette table d'allocation ;
ledit procédé consistant à adresser une ligne de cette table (TAG) par les bits de poids faible de l'adresse du secteur à lire ;
à identifier si le secteur à lire est déjà contenu dans la mémoire cache par comparaison des bits de poids forts de l'adresse du secteur avec les informations contenues dans le tableau (TAG) ;
à décider de lire le secteur dans la mémoire cache (5) en cas d'identification ou de lire le secteur sur le disque pour l'inscrire dans la mémoire cache (5) en cas d'absence ;
à décider de l'emplacement dans lequel on va insérer le secteur en utilisant une table (MRU), moins récemment utilisée (least recently used) pour définir les poids forts de l'adresse de la voie la moins récemment utilisée dans laquelle on va substituer les nouvelles données ;
à modifier le contenu de la table (MRU) suite à l'inscription.

27. Procédé de gestion des échanges selon la revendication 26, caractérisé en ce qu'il consiste à utiliser un tableau (ANCIEN) contenu dans la mémoire EPROM (8) permettant de faire, par simple lecture, la correspondance entre le contenu de la table (MRU) à l'adresse pointée et le numéro de la voie dans laquelle on va inscrire les données ;
à utiliser une combinaison du contenu de la table (MRU) à l'adresse pointée avec le numéro de la voie indiqué par la table (ANCIEN) pour adresser un tableau (MRUA) dans la mémoire (8) dont le contenu à l'adresse ainsi déterminée donne immédiatement par simple lecture la valeur à inscrire dans la table (MRU) pour indiquer que l'ancienneté de la voie dans laquelle on a rangé l'information a été modifiée, ainsi que l'ancienneté des voies associées dans la même ligne du tableau (MRU).

28. Procédé de gestion des échanges selon la revendication 26, caractérisé en ce qu'il comporte en cas d'identification une étape de chargement de l'automate de gestion de pile avec les paramètres nécessaires au transfert des données de la mémoire vers la pile et au déclenchement de l'arbitre.

29. Procédé de gestion des échanges selon la revendication 28, caractérisé en ce qu'il comporte en cas de non identification, préalablement à l'étape ci-dessus, une étape de chargement de l'automate disque par le microprocesseur (6) de la carte avec les paramètres nécessaires à l'échange de données entre le contrôleur de disque (9) et la mémoire CACHE (5) et au déclenchement de l'arbitre (48).

## Patentansprüche

1. Kopplungsschaltung (4) zwischen einer Plattencontrollerschaltung (9), einem Mikroprozessor (6) und einem dynamischen Cache-Speicher (5), der mit einem Zentralprozessor über einen Bus (1) kommuniziert, wobei die Kopplungsschaltung Mittel zum Verwalten der Übertragungen zwischen dem Plattencontroller und dem Cache-Speicher enthält, dadurch kennzeichnet, daß:
- die Mittel (4926, 4505, 4506, 430, 48) zum Verwalten der Übertragungen zwischen dem Plattencontroller (9) und dem Cache-Speicher (5) nach der Initialisierung durch den Prozessor die höchste Priorität besitzen; und daß die Kopplungsschaltung enthält:
- Mittel (430), die in einem zweiten Zugriff mit der höchsten Priorität die Auffrischungszyklen des den Cache bildenden dynamischen Speichers (5) verwalten;
- Mittel (4920, 4500, 447, 64, 441, 445), die den Zugriff des Mikroprozessors (6) auf den Cache-Speicher (5) verwalten;
- Mittel (430, 48, 4500), die nach der Initialisierung durch den Mikroprozessor (6) in beiden Richtungen mit der niedrigsten Priorität die Zugriffe verwalten, die mit den Übertragungen zwischen dem Cache-Speicher (5) und einem daran und an den Bus (1) angeschlossenen bidirektionalen Stapelspeicher (47) in Beziehung stehen, wobei der Stapelspeicher (47) in die Kopplungsschaltung eingebaut ist.

2. Kopplungsschaltung nach Anspruch 1, dadurch gekennzeichnet, daß sie eine Entscheidungsschaltung (48), einen bidirektionalen Stapelspeicher (47) aus 4 Wörtern, der durch einen Stapelspeicher-Automaten gesteuert wird, eine Steuerschaltung (430), die in Abhängigkeit von Informationen, die von einem Anschlagregister des Stapelspeicher-Automaten geliefert werden, ein Signal für die Arbeitsrichtung des Stapelspeichers liefert, sowie einen Komparator (445) für den Stapelspeicher-Automaten enthält, der im voraus vom Mikroprozessor (6) mit der Startadresse für den Datenaustausch mit dem Cache-Speicher (5) geladen wird, wobei das Anschlagregister mit der Endadresse des Austausches und mit einem Validierungsbit (ACTIF) der Entscheidungsschaltung geladen wird.

3. Kopplungsschaltung nach Anspruch 1 oder 2, dadurch gekennzeichnet, daß sie einen Automaten für die Verwaltung der Übertragungen zwischen der Plattencontrollerschaltung (9) und dem Cache-Speicher (5) enthält, wobei der Verwaltungsautomat ein Register (440), das die Anfangsadresse der Übertragung vom Speicher enthält, sowie ein Anschlag- und Komparatorregister (441) umfaßt, das die Übertragungsendadresse und ein Validierungsbit (ACTIE) der Entscheidungsschaltung (48) enthält.

4. Kopplungsschaltung nach einem der Ansprüche 1 bis 3, dadurch gekennzeichnet, daß die Anschlag- und Komparatorregister für den Stapelspeicher (445) und für die Plattenübertragung (441) ein Bit für die Anzeige der Gleichheit der im Anschlagregister (445, 441) und im Zählregister (440, 444) enthaltenen Werte, die zum Anhalten der Entscheidung inkrementiert werden, enthalten.

5. Kopplungsschaltung nach dem vorangehenden Anspruch, dadurch gekennzeichnet, daß die Steuerungsschaltung (430) die Inkrementierungssignale (INCF, INCE) der Zähler (440, 444) und der Stapelspeicher- bzw. Plattenautomaten liefert.

6. Kopplungsschaltung nach einem der Ansprüche 3 bis 5, dadurch gekennzeichnet, daß der Automat für die Platte/Speicher-Übertragung zwei Vorladungsregister (442, 443) enthält, die die Vorladung des Inhalts des Zählregisters (444) und des Anschlagregisters (441) ermöglichen, um eine Platte/Speicher-Übertragung zu beschleunigen.

7. Kopplungsschaltung nach einem der Ansprüche 1 bis 6, dadurch gekennzeichnet, daß sie ein Register (MODE) (494) und einen Auffrischungstaktgeber (496) enthält, dessen Periode durch den Inhalt des dritten Bits des Registers (MODE) (494) parametrisiert wird.

8. Kopplungsschaltung nach einem der vorangehenden Ansprüche, dadurch gekennzeichnet, daß die Bits 0 und 1 des Registers (MODE) an eine Schaltung (495) zur Maskierung der Plattenübertragungsanforderung geschickt werden, um die Maskierungszeit der vom Mikroprozessor (6) ausgegebenen Übertragungsanforderungen zu parametrisieren.

9. Kopplungsschaltung nach einem der Ansprüche 1 bis 8, dadurch gekennzeichnet, daß sie Zähler (496, 497) enthält, die durch einen in Abhängigkeit von den Platteneigenschaften parametrisierten Taktgeber inkrementiert werden, und ein Indexsignal für die Erfassung des Übergangs vom Sektor "0" enthält, das von der Plattencontrollerschaltung (9) geliefert wird und der Reinitialisierung des Sektorzählers (496, 497) einer Platte dient.

10. Kopplungsschaltung nach einem der Ansprüche 1 bis 9, dadurch gekennzeichnet, daß die Steuerungsschaltung (430) außerdem Signalfolgen (RAS, CAS, WE, CSE1, CSE2) erzeugt, die für den Betrieb des Cache-Speichers (5) erforderlich sind.

11. Kopplungsschaltung nach einem der Ansprüche 1 bis 10, dadurch gekennzeichnet, daß sie eine Steuerschaltung (470) für die Parität der in den Cache-Speicher (5) geschriebenen Daten enthält, um im Fall einer Nichtübereinstimmung zwischen der gelesenen Parität und der von der Paritätsschaltung (470) berechneten Parität eine Unterbrechung für den Mikroprozessor (6) zu erzeugen.

12. Kopplungsschaltung nach einem der Ansprüche 1 bis 11, dadurch gekennzeichnet, daß sie einen Stapelspeicher (COMMAND INTERFACE) (407), einen Schnittstellenzustand-Stapelspeicher (408) und ein Grundzustandsregister (406) enthält, um dem Zentralprozessor zu ermöglichen, den Zustand der Stapelspeicher abzufragen, wobei die Stapelspeicher einerseits an den "MCA"-Bus (1) und andererseits an den Datenbus des Mikroprozessors (6) angeschlossen sind, wobei der Stapelspeicher (COMMAND INTERFACE) (407) vom Zentralprozessor dazu verwendet wird, einen Steuerblock an die Kopplungsschaltung (406) zu übertragen, und wobei der Schnittstellenzustand-Stapelspeicher (408) vom Zentralprozessor dazu verwendet wird, einen Zustandsblock wiederzugewinnen.

13. Kopplungsschaltung nach Anspruch 12, dadurch gekennzeichnet, daß sie außerdem ein Register (ATTENTION) enthält, das zwischen den "MCA"-Bus und den Datenbus des Mikroprozessors geschaltet ist, um dem Mikroprozessor (6) anzuzeigen, daß der Zentralprozessor einen neuen Befehl schicken will.

14. Kopplungsschaltung nach Anspruch 13, dadurch gekennzeichnet, daß sie außerdem ein Unterbrechungszustandsregister (404) enthält, um den Zentralprozessor zu unterbrechen und ihn über den Unterbrechungstyp zu informieren.

15. Kopplungsschaltung nach Anspruch 14, dadurch gekennzeichnet, daß sie ein Zustandsregister (ITGA) (4090) enthält, das dem Mikroprozessor (6) die Quelle anzeigt, die für den Mikroprozessor (6) eine Unterbrechung erzeugt hat.

16. Kopplungsschaltung nach Anspruch 15, dadurch gekennzeichnet, daß sie ein Steuerregister CTL ITGA (4091) enthält, das dem Mikroprozessor (6) ermöglicht, die Informationen des Zustandsregisters (ITGA) (4090) auf "0" zurückzusetzen.

17. Kopplungsschaltung nach Anspruch 12, dadurch gekennzeichnet, daß ein Bit des Grundzustandsregisters (406) dazu verwendet wird, eine Datenübertragungsanforderung anzuzeigen, indem ein Signal (DRQ) von der Kopplungsschaltung zur Schnittstellenschaltung (2) der Karte erzeugt wird.

18. Schnittstellenkarte zwischen einem "MCA"-Bus (1) und einer Plattenlesevorrichtung, wobei die Schnittstellenkarte eine Plattencontrollerschaltung (9), einen Mikroprozessor (6), einen Cache-Speicher (5) und eine Kopplungsschaltung (4) nach einem der vorangehenden Ansprüche enthält, dadurch gekennzeichnet, daß der Plattencontroller (9) über eine Multiplexerschaltung (490, 491) mit zwei Datenbussen (492, 450) kommuniziert, wovon ein erster (492) mit dem Mikroprozessor (6) und der Kopplungsschaltung (4) kommuniziert und ein zweiter (450) mit dem Cache-Speicher (5) und der Kopplungsschaltung (4) kommuniziert, wobei der Mikroprozessor (6) über einen Adressenbus mit einem statischen Schreib-Lese-Speicher (7) und mit einem nichtflüchtigen Speicher (8) kommuniziert, der die Software für die Verwaltung des Austausches zwischen der Platte und dem Cache-Speicher (5) oder zwischen dem Cache-Speicher (5) und dem "MCA"-Bus (1) sowie Tabellen für die Verwaltung des Cache-Speichers enthält.

19. Schnittstellenkarte nach Anspruch 18, dadurch gekennzeichnet, daß die Kopplungsschaltung (4) über einen Datenbus (41) mit dem "MCA"-Bus (1) und mit einem Festwertspeicher (3) kommuniziert, der die Eingabe/Ausgabe-Basissoftware der Schnittstellenkarte mit dem System enthält.

20. Schnittstellenkarte nach Anspruch 19, dadurch gekennzeichnet, daß die Kopplungsschaltung (4) über einen Adressenbus (492) einerseits mit dem Festwertspeicher (3) und andererseits über ein Validierungsgatter (12) mit dem "MCA"-Bus (1) kommuniziert, wobei die Kopplungsschaltung (4) Steuersignale mit einer Bus-Entscheidungsschaltung (2) austauscht, die an den Adressenbus des "MCA"-Busses (1) angeschlossen ist und die Steuersignale mit diesem "MCA"-Bus (1) austauscht.

21. Schnittstellenkarte nach einem der Ansprüche 18 bis 20, dadurch gekennzeichnet, daß der Mikroprozessor (6) die Verwaltungstabellen des Cache-Speichers verwaltet;
- die von der Zentraleinheit stammenden Befehle interpretiert;
- die Automaten der Kopplungsschaltung (4) programmiert;
- und die Plattencontrollerschaltung (9) steuert.

22. Verfahren zum Verwalten des Austausches zwischen einem Zentralprozessor und einer Kopplungsschaltung (4) zwischen Plattencontrollerschaltungen (9), einem Mikroprozessor (6) und einem dynamischen Cache-Speicher (5), dadurch gekennzeichnet, daß es darin besteht:
die Übertragungen zwischen dem Plattencontroller (9) und dem Cache-Speicher (5) nach der Initialisierung durch den Mikroprozessor (6) mit der höchsten Priorität zu verwalten;
in einem zweiten Zugriff mit der höchsten Priorität die Auffrischungszyklen des den Cache bildenden dynamischen Speichers (5) zu verwalten;
die Zugriffe des Mikroprozessors (6) auf den Cache-Speicher (5) zu verwalten; und
die Zugriffe zwischen dem Cache-Speicher (5) und einem an diesen und an einen Bus (1) für die Kommunikation mit dem Zentralprozessor angeschlossenen bidirektionalen Stapelspeicher (47) in den beiden Richtungen nach der Initialisierung durch den Mikroprozessor mit der niedrigsten Priorität zu verwalten.

23. Verfahren zum Verwalten des Austausches nach Anspruch 22, dadurch gekennzeichnet, daß es einen Schritt zur Erzeugung einer Unterbrechung (ATN) durch die Kopplungsschaltung (4) für den Mikroprozessor (6) des Kopplers enthält.

24. Verfahren zum Verwalten des Austausches nach Anspruch 22, dadurch gekennzeichnet, daß es darin besteht, den "DMA" der Kopplungsschaltung (4) zu programmieren und den Kanal des Direktspeicherzugriffs für den Koppler (4) zu validieren, nachdem eine Übertragungsunterbrechung (READY) empfangen worden ist, die von dem Code erzeugt wird, der aus den drei Bits des Unterbrechungszustandsregisters (404) gebildet und vom Mikroprozessor (6) geschrieben wird;
ein Bit (DMA ENB) des Steuerregisters (BASIC CONTROL) (405) zu validieren, um den Kanal des Direktspeicherzugriffs für den Koppler zu validieren.

25. Verfahren zum Verwalten des Austausches nach Anspruch 24, dadurch gekennzeichnet, daß es einen Schritt zum Validieren eines Bits (ITEN) des Steuerregisters (BASIC CONTROL) (405) enthält, um die vom Koppler für den Zentralprozessor erzeugten Unterbrechungen zu validieren.

26. Verfahren zum Verwalten des Austausches nach einem der Ansprüche 18 bis 21, dadurch gekennzeichnet, daß der Cache-Speicher (6) in 4 Wege unterteilt ist und der EPROM-Speicher (5) eine Zuweisungstabelle (TAG) des Cache-Speichers (6) enthält, die die Identifizierung des Sektors oder des Sektorabschnitts, der in jedem Weg einer Reihe dieser Zuweisungstabelle enthalten ist, repräsentiert;
wobei das Verfahren darin besteht, eine Reihe dieser Tabelle (TAG) durch die niederwertigen Bits der Adresse des zu lesenden Sektors zu adressieren;
festzustellen, ob der zu lesende Sektor bereits im Cache-Speicher enthalten ist, indem die hochwertigen Bits der Adresse des Sektors mit den in der Tabelle (TAG) enthaltenen Informationen verglichen werden;
zu entscheiden, ob der Sektor im Cache-Speicher (5) gelesen wird, falls die Feststellung erfolgt, oder ob der Sektor auf der Platte gelesen wird, um bei fehlender Feststellung in den Cache-Speicher (5) zu schreiben;
zu entscheiden, an welcher Stelle der Sektor eingefügt wird, indem eine Tabelle (MRU) verwendet wird, die am weitesten zurückliegend verwendet wurde (least recently used), um die hochwertigen Stellen der Adresse des am weitesten zurückliegend verwendeten Wegs zu definieren, in welchem die neuen Daten ersetzt werden;
den Inhalt der Tabelle (MRU) infolge des Beschreibens zu modifizieren.

27. Verfahren zum Verwalten des Austausches nach Anspruch 26, dadurch gekennzeichnet, daß es darin besteht, eine Tabelle (ANCIEN) zu verwenden, die im EPROM-Speicher (8) enthalten ist und ermöglicht, durch einfaches Lesen die Korrespondenz zwischen dem Inhalt der Tabelle (MRU) an der bezeichneten Adresse und der Nummer des Wegs, in den die Daten geschrieben werden, herzustellen;
eine Kombination des Inhalts der Tabelle (MRU) an der bezeichneten Adresse und der Nummer des durch die Tabelle (ANCIEN) bezeichneten Wegs zu verwenden, um eine Tabelle (MRUA) im Speicher (8) zu adressieren, deren Inhalt bei der so bestimmten Adresse sofort durch einfaches Lesen den in die Tabelle (MRU) zu schreibenden Wert angibt, um anzuzeigen, daß das Alter des Wegs, in den die Information eingereiht worden ist, ebenso wie das Alter der Wege, die derselben Reihe der Tabelle (MRU) zugeordnet sind, modifiziert worden sind.

28. Verfahren zum Verwalten des Austausches nach Anspruch 26, dadurch gekennzeichnet, daß es im Fall der Feststellung einen Schritt zum Laden des Stapelspeicherverwaltungs-Automaten mit den Parametern, die für die Übertragung von Daten vom Speicher zum Stapelspeicher und für die Auslösung der Entscheidung notwendig sind, enthält.

29. Verfahren zum Verwalten des Austausches nach Anspruch 28, dadurch gekennzeichnet, daß es im Fall der Nichtfeststellung vor dem obigen Schritt einen Schritt zum Laden des Platten-Automaten durch den Mikroprozessor (6) der Karte mit den Parametern, die für den Austausch von Daten zwischen dem Plattencontroller (9) und dem Cache-Speicher (5) und für die Auslösung der Entscheidung (48) erforderlich sind.

## Claims

1. Coupler circuit (4) between a disk controller circuit (9), a microprocessor (6), a dynamic cache memory (5) communicating with a central processor through a bus (1), said coupler circuit comprising means for managing transfers between the disk controller and the cache memory, characterised in that:
- said means (4926, 4505, 4506, 430, 48) for managing transfers between the disk controller (9) and the cache memory (5) after initialisation by the processor have the highest priority; and in that said coupler circuit includes
- means (430) for managing, as the access with second highest priority, the refresh cycles of the dynamic memory (5) constituting the cache;
- means (4920, 4500, 447, 64, 441, 445) for managing accesses by the microprocessor (6) to the cache memory (5);
- means (430, 48, 4500) for managing in both directions, with the lowest priority, accesses linked to transfers between the cache memory (5) and a bidirectional stack (47) connected thereto and to said bus (1), said stack (47) being incorporated into the coupler circuit, after initialisation by the microprocessor (6).

2. Coupler circuit according to Claim 1, characterised in that it comprises an arbitration circuit (48), a 4-word bidirectional stack (47) controlled by an automatic stack controller, a controller circuit (430) supplying a signal for the operating direction of the stack as a function of the information supplied by a stop register of the stack automaton and a comparator (445) of the stack automaton pre-loaded by the microprocessor (6) with the start address of exchanges with the cache memory (5), the stop register being loaded with the end-of-exchange address and with a validation bit (ACTIF) for the arbitration circuit.

3. Coupler circuit according to Claim 1 or 2, characterised in that it comprises an automaton for managing transfers between the disk controller circuit (9) and the cache memory (5), said management automaton comprising a register (440) containing the start-of-transfer address for the memory, and a stop register (441) and comparator containing the end-of-transfer address, and a validation bit (ACTIE) for the arbitration circuit (48).

4. Coupler circuit according to one of Claims 1 to 3, characterised in that the stack comparator (445) and disk transfer (441) stop registers comprise a bit indicating the equality of the values contained in the stop (445, 441) and in the counter register (440, 444) incremented in order to stop the arbitrator.

5. Coupler circuit according to the preceding claim, characterised in that the controller circuit (430) supplies the increment signals (INCF, INCE) for the counters (440, 444) of the stack and disk automatons respectively.

6. Coupler circuit according to one of Claims 3 to 5, characterised in that the automaton for memory disk transfer comprises two pre-loading registers (442, 443) making it possible to pre-load the content of the counter (444) and stop (441) registers in order to accelerate memory disk transfer.

7. Coupler circuit according to one of Claims 1 to 6, characterised in that it comprises a register (MODE) (494) and a refresh clook (496), the period of which can be assigned parameters by the content of the third bit of the register (MODE) (494).

8. Coupler circuit according to one of the preceding claims, characterised in that bits 0 and 1 of the register (MODE) are sent over a disk transfer request masking circuit (495) in order to assign parameters to the transfer masking time for requests made by the microprocessor (6).

9. Coupler circuit according to one of Claims 1 to 8, characterised in that it comprises counters (496, 497) incremented by a clock with parameters assigned as a function of characteristics of the disk, and an index signal detecting the passage of the sector "0" supplied by the disk controller circuit (9) and serving to reset the sector counter (496, 497) of a disk.

10. Coupler circuit according to one of Claims 1 to 9, characterised in that the controller circuit (430) further establishes the sequences of signals (RAS, CAS, WE, CSE1, CSE2) necessary to the functioning of the cache memory (5).

11. Coupler circuit according to one of Claims 1 to 10, characterised in that it comprises a circuit (470) controlling the parity of the data written to the cache memory (5) in order to generate an interruption to be sent to the microprocessor (6) in the event of non-correlation between the parity read and that calculated by the parity circuit (470).

12. Coupler circuit according to one of Claims 1 to 11, characterised in that it comprises a stack (COMMAND INTERFACE) (407), an interface status stack (408), a basic status register (406), to allow the central processor to consult the status of the stacks, said stacks being connected on the one hand to the "MCA" bus (1) and on the other hand to the data bus of the microprocessor (6), the stack (COMMAND INTERFACE) (407) being used by the central processor to transfer a control block to the coupler circuit (4) and the interface status stack (408) being used by the central processor in order to recover a status block.

13. Coupler circuit according to Claim 12, characterised in that it further comprises a register (ATTENTION) connected between the "MCA" bus and the data bus of the microprocessor in order to indicate to the microprocessor (6) that the central processor wishes to send a new command.

14. Coupler circuit according to Claim 13, characterised in that it further comprises an interruptions status register (404) to interrupt the central processor and inform it of the type of interruption.

15. Coupler circuit according to Claim 14, characterised in that it comprises a status register (ITGA) (4090) indicating to the microprocessor (6) the source that has generated an interruption to be sent to the microprocessor (6).

16. Coupler circuit according to Claim 15, characterised in that it comprises a CTL ITGA control register (4091) to allow the microprocessor (6) to reset to "0" the information from the status register (ITGA) (4090).

17. Coupler circuit according to Claim 12, characterised in that one bit of the basic status register (406) is used to indicate a request to transfer data by generating a signal (DRQ) of the coupler circuit going towards the interface circuit (2) of the board.

18. Interface board between an "MCA" bus (1) and a disk reader, said interface board comprising a disk controller circuit (9), a microprocessor (6), a cache memory (5), and a coupler circuit (4) according to one of the preceding claims, characterised in that the disk controller (9) communicates via a multiplexing circuit (490, 491) with two data buses (492, 450), a first bus (492) communicating with the microprocessor (6) and the coupler circuit (4) and a second bus (450) communicating with the cache memory (5) and the coupler circuit (4), the microprocessor (6) communicates via an address bus with a static random access memory (7), a non-volatile memory (8) containing the software for managing exchanges between the disk and the cache memory (5) or between the cache memory (5) and the "MCA" bus (1) and tables for managing the cache memory.

19. Interface board according to Claim 18, characterised in that the coupler circuit (4) communicates via a data bus (41) with the "MCA" bus (1) and a read-only memory (3) containing the basic input/output software of the interface board with the system.

20. Interface board according to Claim 19, characterised in that the coupler circuit (4) communicates via an address bus (492) on the one hand with the read-only memory (3), and on the other hand via a validation gate (12) with the "MCA" bus (1), said coupler circuit (4) exchanging control signals with a bus arbitration circuit (2) connected to the address bus of the "MCA" bus (1) and exchanging control signals with this "MCA" bus (1).

21. Interface board according to one of Claims 18 to 20,
characterised in that the microprocessor (6) manages the management tables of the cache memory;
- interprets commands coming from the central unit;
- programs the automatons of the coupler circuit (4);
- controls the disk controller circuit (9).

22. Method of exchange management between a central processor and a coupler circuit (4) between disk controller circuits (9), a microprocessor (6) and a dynamic cache memory (5), characterised in that it consists in:
- managing, with the highest priority, the transfers between the disk controller (9) and the cache memory (5), after initialisation by the microprocessor (6);
- managing, as the access with second highest priority, the refresh cycles of the dynamic memory (5) constituting the cache;
- managing the accesses by the microprocessor (6) to the cache memory (5);
- managing in both directions, with the lowest priority, the accesses between the cache memory (5) and a bidirectional stack (47) connected thereto and to a bus (1) communicating with the central processor, after initialisation by the microprocessor.

23. Method of exchange management according to Claim 22, characterised in that it comprises a step of generating an interruption (ATN) by the coupler circuit (4) to go to the microprocessor (6) of the coupler.

24. Method of exchange management according to Claim 22 characterised in that it consists in programming the "DMA" of the coupler circuit (4) and in validating the direct memory access channel to the coupler (4), after having received a transfer interruption (READY) generated by the code formed by the three bits of the interruption status register (404) written by the microprocessor (6);
in validating a bit (DMA ENB) of the control register (BASIC CONTROL) (405) in order to validate the direct memory access channel to the coupler.

25. Method of exchange management according to Claim 24 characterised in that it comprises a step of validating a bit (ITEN) of the control register (BASIC CONTROL) (405) in order to validate the interruptions generated by the coupler going to the central processor.

26. Method of exchange management according to Claims 18 to 21, characterised in that the cache memory (6) is divided into four channels and the EPROM memory (5) contains an allocation table (TAG) for the cache memory (6), representing the identification of the sector or portion of sector contained in each channel of a line of this allocation table;
said method consisting in addressing a line of this table (TAG) by the least significant bits of the address of the sector to be read;
in identifying whether the sector to be read is already contained in the cache memory by comparing the most significant bits of the address of the sector with the information contained in the table (TAG) ;
in deciding to read the sector in the cache memory (5) in the case of identification or to read the sector on the disk in order to record it in the cache memory (5) in the case of absence;
in deciding on the location in which the sector is to be inserted by using a least recently used table (MRU) in order to define the most significant bits of the address of the least recently used channel in which the new data are to be substituted;
in modifying the content of the table (MRU) following recording.

27. Method of exchange management according to Claim 26, characterised in that it consists in using a table (ANCIEN) contained in the EPROM memory (8) making it possible to establish, by simple reading, the correspondence between the content of the table (MRU) at the address selected and the number of the channel in which the data are to be recorded;
in using a combination of the content of the table (MRU) at the address selected with the channel number indicated by the table (ANCIEN) in order to address a table (MRUA) in the memory (8), the content of which, at the address so determined, immediately gives, by simple reading, the value to be recorded in the table (MRU) in order to indicate that the seniority of the channel in which the information has been stored has been changed, as has the seniority of the associated channels in the same line of the table (MRU).

28. Method of exchange management according to Claim 26, characterised in that, in the case of identification, it comprises a step of loading the stack-management automaton with the parameters necessary for transferring data from the memory to the stack and for triggering the arbitrator.

29. Method of exchange management according to Claim 28, characterised in that, in the case of non-identification, prior to the above step, it comprises a step in which the microprocessor (6) of the board loads the disk automaton with the parameters necessary for exchanging data between the disk controller (9) and the CACHE memory (5) and for triggering the arbitrator (48).
